(19)

Europäisches
Patentamt
European
Patent Office
Office européen
des brevets

(11) **EP 4 246 616 A1**

(12) **EUROPEAN PATENT APPLICATION**
published in accordance with Art. 153(4) EPC

(43) Date of publication:
**20.09.2023 Bulletin 2023/38**

(21) Application number: **21891972.8**

(22) Date of filing: **11.11.2021**

(51) International Patent Classification (IPC):
$H01M\ 4/139^{(2010.01)}$     $H01M\ 4/62^{(2006.01)}$
$C01B\ 32/159^{(2017.01)}$     $C01B\ 32/174^{(2017.01)}$

(52) Cooperative Patent Classification (CPC):
**C01B 32/158; C01B 32/159; C01B 32/174;
C09D 17/00; H01B 1/24; H01M 4/13; H01M 4/139;
H01M 4/62; Y02E 60/10**

(86) International application number:
**PCT/JP2021/041613**

(87) International publication number:
**WO 2022/102727 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.11.2020 JP 2020190250
05.07.2021 JP 2021111681**

(71) Applicants:
• **Toyo Ink SC Holdings Co., Ltd.
Tokyo 104-8377 (JP)**

• **TOYOCOLOR CO., LTD.
Tokyo, 104-8381 (JP)**

(72) Inventors:
• **IZUMIYA, Tetsuro
Tokyo 104-8381 (JP)**
• **MORITA, Yu
Tokyo 104-8381 (JP)**

(74) Representative: **Becker, Eberhard
Becker Kurig & Partner
Patentanwälte mbB
Bavariastraße 7
80336 München (DE)**

(54) **CARBON NANOTUBE DISPERSION, CARBON NANOTUBE RESIN COMPOSITION, MIXTURE SLURRY, ELECTRODE MEMBRANE, NON-AQUEOUS ELECTROLYTE SECONDARY BATTERY, AND METHOD FOR MANUFACTURING MIXTURE SLURRY**

(57)    A carbon nanotube dispersion liquid containing carbon nanotubes, a dispersing agent, and a solvent, wherein: the carbon nanotubes include first carbon nanotubes for which the mean outside diameter is 0.5-5 nm, and second carbon nanotubes for which the mean outside diameter is 5-20 nm; and the mass ratio of the first carbon nanotubes and the second carbon nanotubes is 1:10-1:100.

EP 4 246 616 A1

**Description**

[Technical Field]

The present invention relates to a carbon nanotube dispersion, and more specifically, relates to a carbon nanotube dispersion, a resin composition containing a carbon nanotube dispersion and a resin, a mixture slurry containing a carbon nanotube dispersion, a resin and an active material, an electrode film obtained by forming a mixture slurry into a film, and a nonaqueous electrolyte secondary battery including an electrode film and an electrolyte.

[Background Art]

With the spread of electric vehicles and miniaturization, weight reduction and performance improvement of portable devices, there are demands to provide secondary batteries with high energy densities and to increase the capacity of such secondary batteries. In view of this, nonaqueous electrolyte secondary batteries using a nonaqueous electrolytic solution, particularly, lithium ion secondary batteries, have come to be used in many devices because of their high energy density and high voltage.

As a negative electrode material used in these lithium ion secondary batteries, a carbon material represented by graphite, which has a base potential close to that of lithium (Li) and has a large charging and discharging capacity per unit mass, is used. However, these electrode materials are used with the charging and discharging capacity per mass close to the theoretical value, and the energy density per mass of the battery is approaching its limit. Therefore, in order to increase the utilization rate of the electrode, there have been attempts to reduce the amount of conductivity aids and binders that do not contribute to the discharging capacity.

Carbon black, ketjen black, fullerene, graphene, fine carbon materials and the like are used as conductivity aids. Particularly, carbon nanotubes, which are a type of fine carbon fibers, are often used. For example, it is known that, when carbon nanotubes are added to a negative electrode made of graphite or silicon, the conductivity of the electrode, adhesion, and the strength of the electrode such as expansion and contraction, and the rate property and the cycle property of the lithium ion secondary battery are improved (refer to Patent Literature 1). In addition, studies are being conducted to reduce the electrode resistance by adding carbon nanotubes to the positive electrode (refer to Patent Literature 2 and Patent Literature 3). Among these, multi-walled carbon nanotubes having an outer diameter of 10 nm to several tens of 10 nm are relatively inexpensive and are expected to be put into practice.

When carbon nanotubes having a small average outer diameter are used, a conductive network can be efficiently formed with a small amount of carbon nanotubes, and the amount of conductivity aid contained in the positive electrode and negative electrode for the lithium ion secondary battery can be reduced. In addition, it is known that the same effects can be obtained when carbon nanotubes having a long fiber length are used (refer to Patent Literature 4). However, carbon nanotubes having these features have a strong cohesive force and are unlikely to disperse, and therefore a carbon nanotube dispersion having sufficient dispersibility cannot be obtained.

Therefore, methods of stabilizing dispersion of carbon nanotubes using various dispersing agents have been proposed. For example, dispersion in water and N-methyl-2-pyrrolidone (NMP) using a polymer-based dispersing agent such as a water-soluble polymer has been proposed (refer to Patent Literature 1 and Patent Literature 5). In Patent Literature 1, single-walled carbon nanotubes are dispersed in an NMP solvent containing polyvinylpyrrolidone using zirconia beads to improve the conductivity of the electrode and the cycle property of the battery. However, there are problems such as a long dispersion time and a small dispersed particle size of carbon nanotubes, and a large specific surface area of carbon nanotubes, and the output property was not sufficient due to the influence of a solid electrolyte interphase (SEI) film formed on the surface. In addition, in Patent Literature 5, single-walled carbon nanotubes are dispersed in an NMP solvent containing polyvinylpyrrolidone using ultrasonic waves, but it is difficult to disperse carbon nanotubes in a solvent at a high concentration. In addition, a method of stabilizing dispersion of multi-walled carbon nanotubes using nitrile rubber as a dispersing agent has been proposed (refer to Patent Literature 6). In Patent Literature 6, it has been proposed that, when a dispersion containing multi-walled carbon nanotubes having an outer diameter of 10 nm to 30 nm is produced, the output property of the electrode is improved. However, in consideration of the shape and strength, it is difficult for multi-walled carbon nanotubes to form a conduction path as compared with single-walled carbon nanotubes, and the cycle property of lithium ion secondary batteries is not sufficient.

Therefore, obtaining a carbon nanotube dispersion having both the cycle property and the output property is an important issue for more applications.

[Citation List]

[Patent Literature]

[Patent Literature 1]
Japanese Patent Laid-Open No. 2020-105316
[Patent Literature 2]
Japanese Patent Laid-Open No. 2011-70908
[Patent Literature 3]
Japanese Patent Laid-Open No. 2014-19619
[Patent Literature 4]
Japanese Patent Laid-Open No. 2012-221672
[Patent Literature 5]
Japanese Patent Laid-Open No. 2005-162877
[Patent Literature 6]
Published Japanese Translation No. 2018-533175 of the PCT International Publication

[Summary of Invention]

[Technical Problem]

An objective achieved by the present invention is to provide a carbon nanotube dispersion having a high dispersibility, a carbon nanotube resin composition and a mixture slurry in order to obtain an electrode film having excellent conductivity, and more specifically, to provide a nonaqueous electrolyte secondary battery having an excellent rate property and cycle property.

[Solution to Problem]

The inventors of the present invention conducted extensive studies in order to address the above problems. The inventors found that, when a carbon nanotube dispersion containing carbon nanotubes, a dispersing agent, and a solvent, which is a carbon nanotube dispersion containing at least two types of carbon nanotubes having different average outer diameters at a specific mass ratio, is used, properties of two types of carbon nanotubes can be maximized, an electrode film having excellent conductivity can be obtained, and a nonaqueous electrolyte secondary battery in which a favorable conduction path is formed and which has an excellent rate property and cycle property can be obtained.

That is, one embodiment of the present invention relates to a carbon nanotube dispersion containing carbon nanotubes, a dispersing agent, and a solvent in which the carbon nanotubes include first carbon nanotubes having an average outer diameter of 0.5 to 5 nm and second carbon nanotubes having an average outer diameter of 5 to 20 nm, and the mass ratio between the first carbon nanotubes and the second carbon nanotubes is 1:10 to 1:100.

In addition, another embodiment of the present invention relates to the carbon nanotube dispersion in which the total BET specific surface area of the first carbon nanotubes and the second carbon nanotubes contained in the carbon nanotube dispersion is 240 to 750 $m^2$/g.

In addition, another embodiment of the present invention relates to the carbon nanotube dispersion in which the aspect ratio of the first carbon nanotubes is 2,000 to 10,000, and the aspect ratio of the second carbon nanotubes is 50 to 200.

In addition, another embodiment of the present invention relates to the carbon nanotube dispersion in which, in a Raman spectrum of the first carbon nanotubes, when the maximum peak intensity in a range of 1,560 to 1,600 $cm^{-1}$ is G, and the maximum peak intensity in a range of 1,310 to 1,350 $cm^{-1}$ is D, the G/D ratio is 10 to 100.

In addition, another embodiment of the present invention relates to the carbon nanotube dispersion in which the BET specific surface area of the first carbon nanotubes is 600 to 1,200 $m^2$/g.

In addition, another embodiment of the present invention relates to the carbon nanotube dispersion in which the volume resistivity of the first carbon nanotubes is $1.0 \times 10^{-3}$ $\Omega \cdot$cm to $3.0 \times 10^{-2}$ $\Omega \cdot$cm.

In addition, another embodiment of the present invention relates to the carbon nanotube dispersion in which the complex elastic modulus is 5 Pa or more and less than 650 Pa.

In addition, another embodiment of the present invention relates to the carbon nanotube dispersion in which the phase angle is 5° or more and less than 50°.

In addition, another embodiment of the present invention relates to the carbon nanotube dispersion in which the viscosity of a dispersion containing 0.3 parts by mass or more and 5.0 parts by mass or less of the carbon nanotubes in 100 parts by mass of the carbon nanotube dispersion measured at 25°C using a B type viscometer rotor at a rotation speed of 60 rpm is 10 mPa.s or more and less than 2,000 mPa·s.

In addition, another embodiment of the present invention relates to the carbon nanotube dispersion in which the cumulative particle size D50 measured by a dynamic light scattering method is 400 nm to 4,000 nm.

In addition, another embodiment of the present invention relates to a carbon nanotube resin composition including the carbon nanotube dispersion and a binder.

In addition, another embodiment of the present invention relates to a mixture slurry including the carbon nanotube resin composition and an active material.

In addition, another embodiment of the present invention relates to a method of producing the mixture slurry, including the following processes (1) and (2):

(1) a process of obtaining the carbon nanotube dispersion by dispersing a mixed solution containing the first carbon nanotubes, the second carbon nanotubes, the dispersing agent, and the solvent; and
(2) a process of mixing the carbon nanotube dispersion obtained in (1), a binder, and an active material.

In addition, another embodiment of the present invention relates to the method of producing the mixture slurry, including the following processes (1) to (3):

(1) a process of obtaining a first carbon nanotube dispersion by dispersing a mixed solution containing the first carbon nanotubes, the dispersing agent, and the solvent;
(2) a process of obtaining a second carbon nanotube dispersion by dispersing a mixed solution containing the second carbon nanotubes, the dispersing agent, and the solvent; and
(3) a process of mixing the first carbon nanotube dispersion, the second carbon nanotube dispersion, a binder, and an active material.

In addition, another embodiment of the present invention relates to an electrode film obtained by forming the mixture slurry into a film.

In addition, another embodiment of the present invention relates to a nonaqueous electrolyte secondary battery including a positive electrode, a negative electrode, and an electrolyte in which at least one of the positive electrode and the negative electrode includes the electrode film.

[Advantageous Effects of Invention]

According to embodiments of the present invention, it is possible to provide a carbon nanotube dispersion having high dispersibility, a carbon nanotube resin composition and a mixture slurry. In addition, it is possible to provide a nonaqueous electrolyte secondary battery having an excellent rate property and cycle property.

[Description of Embodiments]

Hereinafter, a carbon nanotube dispersion, a resin composition, a mixture slurry and an electrode film which is a coating film thereof, and a nonaqueous electrolyte secondary battery according to one embodiment of the present invention will be described in detail. Here, in this specification, when a numerical value range is indicated using "to", the range includes numerical values stated before and after "to" as a minimum value and a maximum value. In the numerical value ranges described stepwise in this specification, an upper limit value or a lower limit value of a certain stepwise numerical value range can be arbitrarily combined with an upper limit value or a lower limit value of other stepwise numerical value ranges.

<Carbon nanotube dispersion>

A carbon nanotube dispersion according to one embodiment of the present invention (hereinafter simply referred to as a dispersion) contains at least carbon nanotubes, a dispersing agent, and a solvent. Hereinafter, the carbon nanotubes, the dispersing agent, and the solvent will be described in detail.

(Carbon nanotubes)

Carbon nanotubes (hereinafter referred to as CNTs) in the present embodiment include two or more types of carbon nanotubes having different average outer diameters, and specifically include at least first carbon nanotubes and second carbon nanotubes.

The average outer diameter of the first carbon nanotubes is 0.5 nm or more and less than 5 nm, preferably 1 nm or more and 3 nm or less, and more preferably 1 nm or more and 2 nm or less. The average outer diameter of the second carbon nanotubes is 5 nm or more and 20 nm or less, and more preferably 5 nm or more and 15 nm or less. The average outer diameter of the carbon nanotubes can be obtained by observing the morphology of carbon nanotubes using a transmission electron microscope, measuring the lengths of minor axes, and calculating the average value of 300 carbon nanotubes. Specifically, the average outer diameter of the carbon nanotubes can be obtained, for example, by forming a film using a diluted solution containing carbon nanotubes, performing observation using a direct transmission electron microscope (H-7650, commercially available from Hitachi, Ltd.) at a magnification of 50,000, measuring the outer diameters of 300 randomly extracted carbon nanotubes, and calculating the average value thereof.

The first carbon nanotube is preferably a single-walled carbon nanotube, and the second carbon nanotube is preferably a multi-walled carbon nanotube. The single-walled carbon nanotube has a structure in which one graphite layer is wound, and the multi-walled carbon nanotube has a structure in which two, three or more graphite layers are wound.

The first carbon nanotube is a carbon material with a strong cohesive force and poor dispersibility, and has high linearity, and thus contributes to conduction between active materials that are relatively distant in the electrode layer, but the contact probability with the active material is considered to be relatively low. On the other hand, the second carbon nanotube is a carbon material with a weak cohesive force and favorable dispersibility, and has low linearity, and thus contributes to conduction between active materials that are relatively close to each other, and the contact probability with the active material is considered to be relatively high.

The mass ratio between the first carbon nanotubes and the second carbon nanotubes is 1:10 to 1:100, preferably 1:12 to 1:70, and more preferably 1:15 to 1:40. Within the above range, it is possible to obtain a carbon nanotube dispersion which allows an electrode layer which has favorable dispersibility, excellent conduction between active materials, a high contact probability with the active material, and an excellent peeling strength (adhesion) to be formed.

In Raman spectrums, when the maximum peak intensity in a range of 1,560 to 1,600 $cm^{-1}$ is G, and the maximum peak intensity in a range of 1,310 to 1,350 $cm^{-1}$ is D, the G/D ratio of the first carbon nanotubes is 10 to 100, preferably 10 to 50, and more preferably 20 to 50. The G/D ratio of the second carbon nanotubes is 0.5 or more and less than 10, preferably 0.5 to 4.5, and more preferably 1.0 to 4.0.

The Brunauer Emmett Teller (BET) specific surface area of the first carbon nanotubes is 600 to 1,200 $m^2/g$, preferably 600 to 1,000 $m^2/g$, and more preferably 800 to 1,000 $m^2/g$. The BET specific surface area of the second carbon nanotubes is 150 to 750 $m^2/g$, preferably 200 to 750 $m^2/g$, and more preferably 230 to 750 $m^2/g$.

The total BET specific surface area of the carbon nanotubes is preferably 240 to 750 $m^2/g$, more preferably 240 to 650 $m^2/g$, and still more preferably 250 to 650 $m^2/g$. The total BET specific surface area can be calculated from the BET specific surface areas of the first carbon nanotubes and the second carbon nanotubes and the mass ratio of respective carbon nanotubes. Within the above range, in the electrode layer, when charging and discharging are performed while conduction between the active materials is secured, it is possible to minimize the amount of SEI generated on the surface of the CNTs and improve the output property of the battery.

The volume resistivity of the first carbon nanotubes is preferably $1.0 \times 10^{-3}$ to $3.0 \times 10^{-2}$ $\Omega \cdot cm$, and more preferably $1.0 \times 10^{-3}$ to $1.0 \times 10^{-2}$ $\Omega \cdot cm$. The volume resistivity of the second carbon nanotubes is preferably $1.0 \times 10^{-2}$ to $3.0 \times 10^{-2}$ $\Omega \cdot cm$ and more preferably $1.0 \times 10^{-2}$ to $2.0 \times 10^{-2}$ $\Omega \cdot cm$. The volume resistivity of the carbon nanotubes can be measured using, for example, a powder resistivity measuring device (Loresta GP powder resistivity measurement system MCP-PD-51, commercially available from Mitsubishi Chemical Analytech Co., Ltd.).

The carbon purity of the carbon nanotubes is expressed by the content (mass%) of carbon atoms in the carbon nanotubes. The carbon purity with respect to 100 mass% of the carbon nanotubes is preferably 90 mass% or more, more preferably 95 mass% or more, and still more preferably 98 mass% or more.

The amount of metals contained in the carbon nanotubes with respect to 100 mass% of the carbon nanotubes is preferably less than 20 mass%, more preferably less than 10 mass%, and still more preferably less than 5 mass%. Examples of metals contained in carbon nanotubes include metals and metal oxides used as a catalyst when carbon nanotubes are synthesized. Specific examples thereof include metals such as cobalt, nickel, aluminum, magnesium, silica, manganese, and molybdenum, metal oxides, and composite oxides thereof.

The carbon nanotubes may be surface-treated carbon nanotubes. In addition, the carbon nanotubes may be carbon nanotube derivatives to which a functional group represented by a carboxyl group is added. In addition, carbon nanotubes containing substances represented by organic compounds, metal atoms, or fullerenes can be used.

The carbon nanotubes in the present embodiment may be carbon nanotubes produced by any method. Carbon nanotubes can be generally produced by a laser ablation method, an arc discharging method, a thermal CVD method, a plasma CVD method and a combustion method, but the present invention is not limited thereto.

(Dispersing agent)

The dispersing agent in the present embodiment is not particularly limited as long as it can stabilize dispersion of carbon nanotubes, and for example, a surfactant and a resin type dispersing agent can be used. Surfactants are mainly classified into anionic surfactants, cationic surfactants, nonionic surfactants and amphoteric surfactants. A suitable type of dispersing agent can be appropriately used in a suitable blending amount depending on properties required for dispersing carbon nanotubes.

When an anionic surfactant is selected, the type thereof is not particularly limited. Specific examples thereof include fatty acid salts, polysulfonates, polycarboxylates, alkyl sulfate ester salts, alkyl aryl sulfonates, alkyl naphthalene sulfonates, dialkyl sulfonates, dialkyl sulfosuccinates, alkyl phosphates, polyoxyethylene alkyl ether sulfates, polyoxyethylene alkyl aryl ether sulfates, naphthalenesulfonic acid formalin condensates, polyoxyethylene alkyl phosphate sulfonates, glycerol borate fatty acid esters and polyoxyethylene glycerol fatty acid esters, but the present invention is not limited thereto. More specific examples thereof include sodium dodecylbenzenesulfonate, sodium lauryl sulfate, sodium polyoxyethylene lauryl ether sulfate, polyoxyethylene nonylphenyl ether sulfate salts and sodium salts of β-naphthalenesulfonic acid formalin condensate, but the present invention is not limited thereto.

Examples of cationic surfactants include alkylamine salts and quaternary ammonium salts. Specific examples thereof include stearylamine acetate, coconut trimethyl ammonium chloride, tallow trimethyl ammonium chloride, dimethyl dioleyl ammonium chloride, methyloleyldiethanol chloride, tetramethyl ammonium chloride, lauryl pyridinium chloride, lauryl pyridinium bromide, lauryl pyridinium disulfate, cetylpyridinium bromide, 4-alkylmercaptopyridine, poly(vinylpyridine)-dodecyl bromide and dodecylbenzyltriethylammonium chloride, but the present invention is not limited thereto.

Examples of nonionic surfactants include polyoxyethylene alkyl ethers, polyoxyalkylene derivatives, polyoxyethylene phenyl ethers, sorbitan fatty acid esters, polyoxyethylene sorbitan fatty acid esters and alkyl allyl ethers, but the present invention is not limited thereto. Specific examples thereof include polyoxyethylene lauryl ethers, sorbitan fatty acid esters and polyoxyethylene octylphenyl ethers, but the present invention is not limited thereto. In addition, examples of amphoteric surfactants include aminocarboxylates, but the present invention is not limited thereto.

The selected surfactant is not limited to a single surfactant. Therefore, it is possible to use a combination of two or more surfactants. For example, a combination of an anionic surfactant and a nonionic surfactant or a combination of a cationic surfactant and a nonionic surfactant can be used. The blending amount in this case is preferably a blending amount suitable for each surfactant component. As the combination, a combination of an anionic surfactant and a nonionic surfactant is preferable. The anionic surfactant is preferably a polycarboxylate. The nonionic surfactant is preferably polyoxyethylene phenyl ether.

In addition, specific examples of resin type dispersing agents include cellulose derivatives (cellulose acetate, cellulose acetate butyrate, cellulose butyrate, cyanoethyl cellulose, ethyl hydroxyethyl cellulose, nitro cellulose, methyl cellulose, ethyl cellulose, hydroxyethyl cellulose, hydroxypropyl cellulose, hydroxypropyl methyl cellulose, carboxymethyl cellulose, etc.), polyvinyl alcohol, polyvinyl butyral, polyvinylpyrrolidone, and polyacrylonitrile polymers. Particularly, methyl cellulose, ethyl cellulose, carboxymethyl cellulose, polyvinyl alcohol, polyvinyl butyral, polyvinylpyrrolidone, and polyacrylonitrile polymers are preferable.

Carboxymethyl cellulose can be used in the form of a salt such as a sodium salt of carboxymethyl cellulose in which hydroxy groups of carboxymethyl cellulose are replaced with carboxymethyl sodium groups.

The weight average molecular weight in terms of pullulan of the dispersing agent is preferably 5,000 or more and 300,000 or less, more preferably 10,000 or more and 100,000 or less, and still more preferably 10,000 or more and 50,000 or less. When a dispersing agent having an appropriate weight average molecular weight is used, the adsorption to CNTs is improved, and the stability of the carbon nanotube dispersion is further improved. In addition, when a dispersing agent having a weight average molecular weight exceeding the above range is used, the viscosity of the carbon nanotube dispersion increases, and when a disperser such as a nozzle type high pressure homogenizer in which a liquid to be dispersed passes through a narrow flow path is used, the dispersion efficiency may decrease.

In addition, in addition to the dispersing agent, an inorganic base and an inorganic metal salt may be included. The inorganic bases and inorganic metal salts are preferably compounds containing at least one of alkali metals and alkaline earth metals, and specific examples thereof include chlorides, hydroxides, carbonates, nitrates, sulfates, phosphates, tungstates, vanadates, molybdates, niobates, and borates of alkali metals and alkaline earth metals. In addition, among these, chlorides, hydroxides, and carbonates of alkali metals and alkaline earth metals are preferable because they can easily supply cations. Examples of alkali metal hydroxides include lithium hydroxide, sodium hydroxide, and potassium hydroxide. Examples of alkaline earth metal hydroxides include calcium hydroxide and magnesium hydroxide. Examples of alkali metal carbonates include lithium carbonate, lithium hydrogencarbonate, sodium carbonate, sodium hydrogen carbonate, potassium carbonate, and potassium hydrogen carbonate. Examples of alkaline earth metal carbonates include calcium carbonate and magnesium carbonate. Among these, lithium hydroxide, sodium hydroxide, lithium carbonate, and sodium carbonate are more preferable.

In addition, in addition to the dispersing agent, a defoaming agent may be included. The defoaming agent can be arbitrarily used as long as it has a defoaming effect such as commercially available defoaming agents, wetting agents, hydrophilic organic solvents, and water-soluble organic solvents, and one type thereof may be used or a plurality thereof may be used in combination.

Examples thereof include alcohols such as ethanol, propanol, isopropanol, butanol, octyl alcohol, hexadecyl alcohol, acetylene alcohol, ethylene glycol monobutyl ether, methyl cellosolve, butyl cellosolve, propylene glycol monomethyl ether, acetylene glycol, polyoxyalkylene glycol, propylene glycol, and other glycols, fatty acid esters such as diethylene glycol laurate, glycerin monoricinoleate, alkenylsuccinic acid derivatives, sorbitol monolaurate, sorbitol trioleate, polyoxyethylene monolaurate, polyoxyethylene sorbitol monolaurate, and natural wax, amides such as polyoxyalkyleneamide and acrylate polyamine, phosphate esters such as tributyl phosphate and sodium octyl phosphate, metallic soaps such as aluminum stearate and calcium oleate, fats and oils such as animal and vegetable oils, sesame oil, and castor oil mineral oils such as kerosene and paraffin, and silicones such as dimethyl silicone oil, silicone paste, silicone emulsion, organic modified polysiloxane, and fluorosilicone oil.

(Solvent)

The solvent in the present embodiment is not particularly limited as long as carbon nanotubes can be dispersed, and water and/or any one of water-soluble organic solvents or a mixed solvent composed of two or more thereof is preferable, and water is more preferably included. When water is included, the amount of water with respect to the total solvent is preferably 95 mass% or more and more preferably 98 mass% or more.

Examples of water-soluble organic solvents include alcohols (methanol, ethanol, propanol, isopropanol, butanol, isobutanol, secondary butanol, tertiary butanol, benzyl alcohol, etc.), polyhydric alcohols (ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, etc.), polyhydric alcohol ethers (ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monomethyl ether, propylene glycol monoethyl ether, propylene glycol monobutyl ether, ethylene glycol monomethyl ether acetate, triethylene glycol monomethyl ether, triethylene glycol monoethyl ether, triethylene glycol monobutyl ether, ethylene glycol monophenyl ether, propylene glycol monophenyl ether, etc.), amines (ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, tetramethyl propylene diamine, etc.), amides (N-methyl-2-pyrrolidone (NMP), N-ethyl-2-pyrrolidone (NEP), N,N-dimethylformamide, N,N-dimethylacetamide, N,N-diethylacetamide, N-methylcaprolactam, etc.), heterocycles (cyclohexylpyrrolidone, 2-oxazolidone, 1,3-dimethyl-2-imidazolidinone, γ-butyrolactone, etc.), sulfoxides (dimethyl sulfoxide, etc.), sulfones (hexamethylphosphorotriamide, sulfolane, etc.), lower ketones (acetone, methyl ethyl ketone, etc.), and in addition, tetrahydrofuran, urea, acetonitrile and the like can be used.

The carbon nanotube dispersion of the present embodiment contains the above carbon nanotubes, dispersing agent, and solvent, and regarding the aspect ratio of the carbon nanotubes (that is, the aspect ratio after production of the dispersion) in the carbon nanotube dispersion, the aspect ratio of the first carbon nanotubes (average fiber length/average outer diameter) is preferably 2,000 to 10,000, more preferably 2,500 to 7,000, and still more preferably 3,000 to 6,000, and the aspect ratio of the second carbon nanotubes is preferably 50 to 200, more preferably 50 to 150, and still more preferably 55 to 120. The aspect ratio of the carbon nanotubes can be calculated by dropping a diluted dispersion onto a mica substrate, observing the deposited carbon nanotubes under a scanning electron microscope (SEM), and performing image analysis. Specifically, the aspect ratio of the carbon nanotubes can be calculated, for example, as follows.

The CNT dispersion is diluted with a solvent in the CNT dispersion so that the CNT concentration is 0.01 mass%, a film is formed using the diluted solution, the film is observed under an SEM at a magnification of 50,000, carbon nanotubes having an outer diameter of less than 5 nm are defined as first CNTs, carbon nanotubes having an outer diameter of 5 nm or more are defined as second CNTs, and for each of the first CNTs and the second CNTs, the average value of the outer diameters of 100 randomly extracted CNTs is defined as the average outer diameter of the CNTs.

In addition, the film is observed under an SEM at a magnification of 5,000 to 20,000, and for each of the first CNTs and the second CNTs, the average value of the fiber lengths of 100 randomly extracted CNTs is defined as the average fiber length of the CNTs in the CNT dispersion.

The value obtained by dividing the average fiber length of the CNTs in the CNT dispersion by the average outer diameter of the CNTs in the CNT dispersion is defined as the CNT aspect ratio in the CNT dispersion.

As the carbon nanotubes have a longer fiber length, it is easier to secure conduction between active materials, and as the outer diameter is smaller, the carbon nanotubes become more flexible, and it becomes easier to follow expansion and contraction of the active material during charging and discharging. In addition, according to the dispersion treatment, the outer diameter does not change, but the fiber length may change due to cutting. Therefore, it is thought that CNTs having a high aspect ratio in the dispersion (that is, after the dispersion is produced) contribute to maintenance of a conductive network, and CNTs having a low aspect ratio contribute to formation of a uniform conductive network.

The complex elastic modulus of the carbon nanotube dispersion is preferably 5 Pa or more and less than 650 Pa, more preferably 5 Pa or more and less than 400 Pa, and still more preferably 10 Pa or more and less than 400 Pa. The complex elastic modulus of the carbon nanotube dispersion indicates the hardness of the carbon nanotube dispersion, and tends to be smaller as the dispersibility of carbon nanotubes is better and the viscosity of the carbon nanotube dispersion is lower. On the other hand, when the fiber length of carbon nanotubes is long, even if dispersion is favorable, the complex elastic modulus may become a high numerical value due to the structural viscosity of the carbon nanotube itself. As will be described below, the complex elastic modulus of the carbon nanotube dispersion can be measured using a rheometer (RheoStress1 rotary rheometer, commercially available from Thermo Fisher Scientific).

The phase angle of the carbon nanotube dispersion is preferably 5° or more and less than 50° and more preferably 10° or more and less than 50°. The phase angle means the phase shift of the stress wave when the strain applied to the carbon nanotube dispersion is a sine wave. In the case of a purely elastic component, since the sine wave has the same phase as the applied strain, the phase angle is 0°. On the other hand, in a purely viscous component, the stress wave advances by 90°. A carbon nanotube dispersion component having complex elastic modulus and phase angle values within the above ranges has a favorable dispersed particle size and dispersion state of carbon nanotubes, and is suitable as a carbon nanotube dispersion for improving the electrode strength and conductivity. As will be described below, the phase angle of the carbon nanotube dispersion can be measured using a rheometer (RheoStress1 rotary rheometer, commercially available from Thermo Fisher Scientific).

Regarding the viscosity of the carbon nanotube dispersion, the viscosity measured at 60 rpm using a B type viscometer (VISCOMETER, MODEL: BL, commercially available from TOKI SANGYO) is preferably 10 mPa·s or more and less than 10,000 mPa.s, and more preferably 10 mPa·s or more and less than 2,000 mPa·s.

The cumulative particle size D50 of the carbon nanotube dispersion measured by a dynamic light scattering method is preferably 400 to 4,000 nm and more preferably 1,000 to 3,000 nm. The cumulative particle size D50 of the carbon nanotube dispersion can be measured using a particle size distribution meter (Nanotrac UPA, model UPA-EX, commercially available from MicrotracBel Corp.).

In order to obtain the carbon nanotube dispersion of the present embodiment, it is preferable to perform a treatment of dispersing carbon nanotubes in a solvent. The dispersing device used for such a treatment is not particularly limited. In addition, the order and timing of adding carbon nanotubes are not particularly limited. In addition, the first carbon nanotubes and the second carbon nanotubes may be dispersed at the same time or may be mixed after respective dispersions are obtained for preparation.

As the dispersing device, a disperser that is generally used for pigment dispersion or the like can be used. Examples thereof include mixers such as a disper, a homomixer, and a planetary mixer, media type dispersers such as homogenizers (Advanced Digital Sonifer (registered trademark), MODEL 450DA, commercially available from BRANSON, "ClearMix," commercially available from M Technique Co., Ltd., "Filmix" and the like, commercially available from PRIMIX, "Abramix" and the like, commercially available from Silverson Co., Ltd.), paint conditioners (commercially available from Red Devil), Colloid Mill ("PUC Colloid Mill," commercially available from PUC, "Colloid Mill MK," commercially available from IKA), Cone Mill ("Cone Mill MKO" and the like, commercially available from IKA), ball mill, sand mill ("Dyno-Mill," commercially available from Shinmaru Enterprises Corporation), attritor, pearl mill ("DCP mill" and the like, commercially available from Nippon Eirich Co., Ltd.), and coball mill, medialess dispersers such as wet jet mills ("Genas PY," commercially available from Genas, "Starburst," commercially available from Sugino Machine Ltd., and "Nanomizer" and the like, commercially available from Nanomizer Inc.), "Clear SS-5," commercially available from M Technique Co., Ltd. and "MICROS," commercially available from Nara Machinery Co., Ltd., and other roll mills, but the present invention is not limited thereto.

The amount of carbon nanotubes in the carbon nanotube dispersion with respect to 100 parts by mass of the carbon nanotube dispersion is preferably 0.3 parts by mass to 5.0 parts by mass, more preferably 0.5 parts by mass to 3.0 parts by mass, and still more preferably 0.8 parts by mass to 1.5 parts by mass.

In addition, the viscosity of a dispersion containing 0.3 parts by mass or more and 5.0 parts by mass or less of carbon nanotubes in 100 parts by mass of the carbon nanotube dispersion measured at 25°C using a B type viscometer rotor at a rotation speed of 60 rpm is preferably 10 mPa·s or more and less than 2,000 mPa·s.

The amount of the dispersing agent used with respect to the carbon nanotubes in the carbon nanotube dispersion is preferably 20 parts by mass to 150 parts by mass, more preferably 25 parts by mass to 100 parts by mass, and still more preferably 30 parts by mass to 80 parts by mass with respect to 100 parts by mass of the carbon nanotubes

The amount of the dispersing agent used with respect to the first carbon nanotubes in the carbon nanotube dispersion is preferably 50 parts by mass to 250 parts by mass, more preferably 75 parts by mass to 200 parts by mass, and still more preferably 75 parts by mass to 150 parts by mass with respect to 100 parts by mass of the first carbon nanotubes.

The amount of the dispersing agent used with respect to the second carbon nanotubes in the carbon nanotube dispersion is preferably 20 parts by mass to 150 parts by mass, more preferably 20 parts by mass to 100 parts by mass, and still more preferably 20 parts by mass to 60 parts by mass with respect to 100 parts by mass of the second carbon nanotubes.

The pH of the carbon nanotube dispersion is preferably 6 to 11, more preferably 7 to 11, still more preferably 8 to 11, and particularly preferably 9 to 11. The pH of the carbon nanotube dispersion can be measured using a pH meter (pH METER F-52, commercially available from HORIBA, Ltd.).

<Binder>

The binder is a resin that binds substances such as carbon nanotubes.

Examples of binders in the present embodiment include polymers or copolymers containing ethylene, propylene, vinyl chloride, vinyl acetate, vinyl alcohol, maleic acid, acrylic acid, acrylic acid ester, methacrylic acid, methacrylic acid ester, acrylonitrile, styrene, vinyl butyral, vinyl acetal, vinylpyrrolidone or the like as a constituent unit; polyurethane resins, polyester resins, phenol resins, epoxy resins, phenoxy resins, urea resins, melamine resins, alkyd resins, acrylic resins, formaldehyde resins, silicone resins, fluorine resins, cellulose resins such as carboxymethyl cellulose; rubbers such as styrene butadiene rubber and fluorine rubber; and conductive resins such as polyaniline and polyacetylene. In addition, modified products, mixtures, and copolymers of these resins may be used. Among these, carboxymethyl cellulose, styrene butadiene rubber, and polyacrylic acid are preferable.

The type and amount ratio of the binders are appropriately selected according to properties of coexisting substances such as carbon nanotubes and active materials. For example, regarding the amount of carboxymethyl cellulose used, when the mass of the active material is set as 100 mass%, the proportion of carboxymethyl cellulose is preferably 0.5 to 3.0 mass%, and more preferably 1.0 to 2.0 mass%.

Carboxymethyl cellulose is preferably a sodium salt of carboxymethyl cellulose in which hydroxy groups of carboxymethyl cellulose are replaced with carboxymethyl sodium groups.

The viscosity of carboxymethyl cellulose when a 1% aqueous solution is produced is preferably 500 to 6,000 mPa·s and more preferably 1,000 to 3,000 mPa·s. The viscosity of a 1% aqueous solution containing carboxymethyl cellulose can be measured under a condition at 25°C using a B type viscometer rotor at a rotation speed of 60 rpm.

The degree of etherification of carboxymethyl cellulose is preferably 0.6 to 1.5 and more preferably 0.8 to 1.2.

Styrene butadiene rubber that is generally used as a binding material for an electrode can be used as long as it is an oil-in-water emulsion. Regarding the amount of the styrene butadiene rubber used, when the mass of the active material is set as 100 mass%, the proportion of styrene butadiene rubber is preferably 0.5 to 3.0 mass% and more preferably 1.0 to 2.0 mass%.

Regarding the amount of polyacrylic acid used, when the mass of the active material is set as 100 mass%, the proportion of polyacrylic acid is preferably 1 to 25 mass%, and more preferably 5 to 20 mass%.

[Carbon nanotube resin composition]

The carbon nanotube resin composition of the present embodiment contains carbon nanotubes, a dispersing agent, a solvent, and a binder.

In order to obtain the carbon nanotube resin composition of the present embodiment, it is preferable to mix the carbon nanotube dispersion and the binder and homogenize the mixture. As a mixing method, various conventionally known methods can be used. The carbon nanotube resin composition can be produced using the dispersing device described in the above carbon nanotube dispersion.

[Mixture slurry]

The mixture slurry of the present embodiment contains carbon nanotubes, a dispersing agent, a solvent, a binder, and an active material.

<Active material>

The active material in the present embodiment is a material that serves as a basis for the battery reaction. Active materials are classified into a positive electrode active material and a negative electrode active material according to the electromotive force.

The positive electrode active material is not particularly limited, but metal compounds such as metal oxides and metal sulfides that can dope or intercalate lithium ions, conductive polymers and the like can be used. Examples thereof include oxides of transition metals such as Fe, Co, Ni, and Mn, composite oxides with lithium, and inorganic compounds such as transition metal sulfides. Specific examples thereof include transition metal oxide powders such as MnO, $V_2O_5$, $V_6O_{13}$, and $TiO_2$; composite oxide powders of lithium such as layered-structure lithium nickelate, lithium cobaltate, lithium manganate, and spinel-structure lithium manganite and transition metals; and transition metal sulfide powders such as a lithium iron phosphate material which is an olivine-structure phosphate compound, $TiS_2$, and FeS. In addition, conductive polymers such as polyaniline, polyacetylene, polypyrrole, and polythiophene can be used. In addition, mixtures of the above inorganic compounds and organic compounds may be used.

The negative electrode active material is not particularly limited as long as it can dope or intercalate lithium ions. Examples thereof include metal Li, and its alloys such as tin alloys, silicon alloys, and lead alloys; metal oxides such as $Li_xFe_2O_3$, $Li_xFe_3O_4$, $Li_xWO_2$ (x is a number of 0<x<1), lithium titanate, lithium vanadate, and lithium silicate; conductive polymer materials such as polyacetylene and poly-p-phenylene; carbon powders such as artificial graphite such as amorphous carbonaceous materials or highly-graphitized carbon materials such as soft carbon or hard carbon, or natural graphite; and carbon-based materials such as carbon black, mesophase carbon black, resin-baked carbon materials, vapor grown carbon fibers and carbon fibers. These negative electrode active materials can be used alone or a plurality thereof can be used in combination.

A silicon-based negative electrode active material which is a negative electrode active material containing silicon such as a silicon alloy or lithium silicate is preferable as the negative electrode active material in the present embodiment.

As the silicon-based negative electrode active material, examples thereof include so-called metallurgical grade silicon produced by reducing silicon dioxide with carbon, industrial grade silicon obtained by reducing impurities from metallurgical grade silicon by an acid treatment, unidirectional coagulation or the like, high-purity silicon with different crystalline states such as high-purity single crystal, polycrystalline, and amorphous states, produced from silane obtained by reacting silicon, and silicone obtained by making industrial grade silicon have a high purity by a sputtering method or an EB vapor deposition (electron beam vapor deposition) method, and adjusting the crystalline state or precipitation state at the same time.

In addition, examples thereof include silicon oxide, which is a compound of silicon and oxygen and silicon compounds containing silicon and various alloys and of which the crystalline state is adjusted by a rapid cooling method or the like. Among these, a silicon-based negative electrode active material having a structure of which the outside is coated with a carbon film and in which silicon nanoparticles are dispersed in silicon oxide is preferable.

For the negative electrode active material in the present embodiment, in addition to the silicon-based negative electrode active material, it is preferable to use carbon powders such as artificial graphite such as amorphous carbonaceous materials or highly-graphitized carbon materials such as soft carbon or hard carbon, or natural graphite. Among these, it is preferable to use carbon powder such as artificial graphite and natural graphite.

The amount of the silicon-based negative electrode active material is preferably 3 to 50 mass% and more preferably 5 to 25 mass% when the amount of carbon powder such as artificial graphite or natural graphite is set as 100 mass%.

The BET specific surface area of the active material in the present embodiment is preferably 0.1 to 10 $m^2/g$, more preferably 0.2 to 5 $m^2/g$, and still more preferably 0.3 to 3 $m^2/g$.

The average particle size of the active material in the present embodiment is preferably 0.5 to 50 $\mu$m and more preferably 2 to 20 $\mu$m. The average particle size of the active material referred to in this specification is an average value of the particle sizes of the active material measured with an electron microscope.

[Method of producing mixture slurry]

The mixture slurry of the present embodiment can be produced by various conventionally known methods. A carbon nanotube dispersion may be produced by dispersing a mixed solution containing first carbon nanotubes, second carbon nanotubes, a dispersing agent, and a solvent and used, or a first carbon nanotube dispersion and a second carbon nanotube dispersion may be separately produced, mixed and used.

The order of mixing a carbon nanotube dispersion, a binder, and an active material is not particularly limited, and these may be added sequentially or any two or more thereof may be added at the same time. For example, an active material may be added to a carbon nanotube resin composition or an active material may be added to a carbon nanotube dispersion and then a binder may be added for production. In addition, a carbon nanotube resin composition containing one carbon nanotube dispersion may be produced, and an active material and the other carbon nanotube dispersion may then be added simultaneously or sequentially to produce a mixture slurry. In particular, a production method of producing a first carbon nanotube dispersion and a second carbon nanotube dispersion separately, and performing mixing with a binder and an active material is preferable because first carbon nanotubes and second carbon nanotubes are uniformly disposed between active materials so that a favorable conductive network can be formed.

In order to obtain a mixture slurry of the present embodiment, it is preferable to add an active material to a carbon nanotube resin composition and then perform dispersion. A dispersing device used for performing such a treatment is not particularly limited. For the mixture slurry, a mixture slurry can be obtained using the dispersing device described in the above carbon nanotube dispersion.

The amount of the active material in the mixture slurry of the present embodiment with respect to 100 parts by mass of the mixture slurry is preferably 20 to 85 parts by mass, more preferably 30 to 75 parts by mass, and still more preferably 40 to 70 parts by mass.

The amount of the carbon nanotubes in the mixture slurry of the present embodiment with respect to 100 parts by mass of the active material is preferably 0.01 to 10 parts by mass, more preferably 0.02 to 5 parts by mass, and still more preferably 0.03 to 1 part by mass.

The amount of the binder in the mixture slurry of the present embodiment with respect to 100 mass% of the active material is preferably 0.5 to 30 mass%, more preferably 1 to 25 mass%, and particularly preferably 2 to 20 mass%.

The amount of the solid content in the mixture slurry of the present embodiment with respect to 100 mass% of the mixture slurry is preferably 30 to 90 mass%, more preferably 30 to 80 mass%, and still more preferably 40 to 75 mass%.

[Electrode film]

The electrode film of the present embodiment is formed by forming a mixture slurry. For example, it is a coating film in which an electrode mixture layer is formed by applying and drying a mixture slurry on a current collector.

The material and shape of the current collector used for the electrode film of the present embodiment are not particularly limited, and those suitable for various secondary batteries can be appropriately selected. For example, examples of materials of current collectors include metals such as aluminum, copper, nickel, titanium, and stainless steel, and alloys. In addition, regarding the shape, a foil on a flat plate is generally used, but a current collector with a roughened surface, a current collector having a perforated foil shape and a current collector having a mesh shape can be used.

A method of applying a mixture slurry on the current collector is not particularly limited, and known methods can be used. Specific examples thereof include a die coating method, a dip coating method, a roll coating method, a doctor coating method, a knife coating method, a spray coating method, a gravure coating method, a screen printing method, and an electrostatic coating method. Regarding the drying method, standing drying, a fan dryer, a warm air dryer, an infrared heater, a far infrared heater and the like can be used, but the method is not particularly limited thereto.

In addition, after coating, rolling may be performed using a planographic press, a calendar roll or the like. The thickness of the electrode mixture layer is generally 1 $\mu$m or more and 500 $\mu$m or less, and preferably 10 $\mu$m or more and 300 $\mu$m or less.

<<Nonaqueous electrolyte secondary battery>>

The nonaqueous electrolyte secondary battery of the present embodiment includes a positive electrode, a negative electrode, and an electrolyte.

Regarding the positive electrode, those obtained by applying and drying a mixture slurry containing a positive electrode active material on a current collector to produce an electrode film can be used.

Regarding the negative electrode, those obtained by applying and drying a mixture slurry containing a negative electrode active material on a current collector to produce an electrode film can be used.

Regarding the electrolyte, various conventionally known electrolytes in which ions can move can be used. Examples thereof include those containing lithium salts such as $LiBF_4$, $LiClO_4$, $LiPF_6$, $LiAsF_6$, $LiSbF_6$, $LiCF_3SO_3$, $Li(CF_3SO_2)_2N$, $LiC_4F_9SO_3$, $Li(CF_3SO_2)_3C$, LiI, LiBr, LiCl, LiAlCl, $LiHF_2$, LiSCN, and $LiBPh_4$ (where, Ph is a phenyl group), but the present invention is not limited thereto, and those containing sodium salts or calcium salts can be used. The electrolyte is preferably dissolved in a nonaqueous solvent and used as an electrolytic solution.

The nonaqueous solvent is not particularly limited, and examples thereof include carbonates such as ethylene carbonate, propylene carbonate, butylene carbonate, dimethyl carbonate, ethyl methyl carbonate, and diethyl carbonate; lactones such as $\gamma$-butyrolactone, $\gamma$-valerolactone, and $\gamma$-octanoic lactone; glymes such as tetrahydrofuran, 2-methyltetrahydrofuran, 1,3-dioxolane, 4-methyl-1,3-dioxolane, 1,2-methoxyethane, 1,2-ethoxyethane and 1,2-dibutoxyethane; esters such as methylformate, methylacetate, and methylpropionate; sulfoxides such as dimethyl sulfoxide and sulfolane; and nitriles such as acetonitrile. These solvents may be used alone or two or more thereof may be used in combination.

The nonaqueous electrolyte secondary battery of the present embodiment preferably contains a separator. Examples of separators include a polyethylene non-woven fabric, a polypropylene non-woven fabric, a polyamide non-woven fabric and those obtained by subjecting them to a hydrophilic treatment, but the present invention is not particularly limited thereto.

The structure of the nonaqueous electrolyte secondary battery of the present embodiment is not particularly limited, but is generally composed of a positive electrode and a negative electrode, and a separator provided as necessary, and various shapes such as a paper shape, a cylindrical shape, a button shape, and a laminate shape can be used according to the purpose of use.

The present invention relates to the subject matter of Japanese Patent Application No. 2020-190250, filed November 16, 2020. and Japanese Patent Application No. 2021-111681, filed July 5, 2021, the entire content of which is incorporated herein by reference.

Examples

The present invention will be described below in detail with reference to examples. The present invention is not limited to the following examples as long as other examples do not depart from the gist thereof. In examples, "carbon nanotube" may be abbreviated as "CNT." Here, unless otherwise specified, "parts" represent "parts by mass," and "%" represents "mass%."

<Method of measuring physical properties>

Physical properties of CNTs used in examples and comparative examples to be described below were measured by the following methods.

<G/D ratio of CNT>

CNTs were placed on a Raman microscope (XploRA, commercially available from HORIBA, Ltd.), and measurement was performed using a laser wavelength of 532 nm. The measurement conditions were a fetching time of 60 seconds, a number of times of integrations of 2, a neutral density filter of 10%, an objective lens magnification of 20, a confocal hole of 500, a slit width of 100 $\mu$m, and a measurement wavelength of 100 to 3,000 cm$^{-1}$. CNTs for measurement were dispensed on a slide glass, and flattened using a spatula. Among the obtained peaks, in the spectrum, the maximum peak intensity within a range of 1,560 to 1,600 cm$^{-1}$ was G, the maximum peak intensity within a range of 1,310 to 1,350 cm$^{-1}$ was D, and the ratio of G/D was used as the G/D ratio of CNTs.

<BET specific surface area of CNT>

0.03 g of CNTs was weighed out using an electronic balance (MSA225S100DI, commercially available from Sartorius), and then dried at 110°C for 15 minutes while degassing. Then, the BET specific surface area of CNTs was measured using a fully automatic specific surface area measuring device (HM-model1208, commercially available from MOUNTECH).

<Total BET specific surface area of CNTs>

Using the BET specific surface area of CNTs measured by the above method and the mass ratio of CNTs in the CNT dispersion produced in examples and comparative examples to be described below, the value calculated by the following formula was defined as a total BET specific surface area of CNTs.

$$\text{(total BET specific surface area of CNTs)}=\text{(A+B)}$$

$$\text{A=(BET specific surface area of first CNTs)}\times\text{(mass ratio of first CNTs in dispersion)}$$

$$\text{B=(BET specific surface area of second CNTs)}\times\text{(mass ratio of second CNTs in dispersion)}$$

<Outer diameter and average outer diameter of CNTs>

0.2 g of CNTs was weighed out in a 450 mL SM sample bottle (commercially available from Sansyo Co., Ltd.) using an electronic balance (MSA225S100DI, commercially available from Sartorius), 200 mL of toluene was added thereto, and the mixture was dispersed using an ultrasonic homogenizer (Advanced Digital Sonifer (registered trademark), MODEL 450DA, commercially available from BRANSON) at an amplitude of 50% for 5 minutes under ice cooling to prepare a CNT dispersion. Then, the CNT dispersion was appropriately diluted, several $\mu$L thereof was added dropwise into a form of a collodion film and dried at room temperature, and observation was then performed using a direct transmission electron microscope (H-7650, commercially available from Hitachi, Ltd.). Observation was performed at a magnification of 50,000, a plurality of images including 10 or more CNTs within the field of view were captured, the outer diameters of 300 randomly extracted CNTs were measured, and the average value thereof was used as the average outer diameter (nm) of the CNTs.

<CNT aspect ratio in CNT dispersion>

A CNT dispersion produced in examples to be described below was diluted with a solvent used when the CNT dispersion was produced so that the CNT concentration was 0.01 mass%, several μL thereof was added dropwise onto a mica substrate, and then dried in an electric oven at 120°C to produce a substrate for observing the CNT fiber length. Then, the surface of the produced substrate for observing the CNT fiber length was sputtered with platinum. In addition, observation was then performed using an SEM. Observation was performed at a magnification of 50,000, images for measuring the outer diameter were captured within the field of view including 10 or more CNTs. and subsequently, the magnification was lowered to between 5,000 and 20,000 so that the whole shape of the imaged CNT could be seen, and images for measuring the fiber length were captured. The field of view was changed, and a plurality of images for measuring the outer diameter and for measuring the fiber length were captured. Then, the outer diameter of the CNTs was measured from the images for measuring the outer diameter, CNTs having an outer diameter of less than 5 nm were defined as first CNTs, CNTs having an outer diameter of 5 nm or more were defined as second CNTs, and for each of the first CNTs and the second CNTs, the average value of the outer diameters of 100 randomly extracted CNTs was defined as an average outer diameter of the CNTs. In addition, the fiber length of the CNTs of which the outer diameter was measured was measured from the images for measuring the fiber length, and the average value for each of the first CNTs and the second CNTs was defined as a fiber length of the CNTs in the CNT dispersion. The value obtained by dividing the fiber length of the CNTs in the CNT dispersion by the average outer diameter of the CNTs in the CNT dispersion was used as a CNT aspect ratio in the CNT dispersion.

<Volume resistivity of CNT>

Using a powder resistivity measuring device (Loresta GP powder resistivity measurement system MCP-PD-51, commercially available from Mitsubishi Chemical Analytech Co., Ltd.), 1.2 g of a sample mass was used, and using a powder probe unit (four-point probe/ring electrode, electrode interval of 5.0 mm, electrode radius of 1.0 mm, sample radius of 12.5 mm), an applied voltage limiter was set to 90 V, and the volume resistivity [$\Omega \cdot cm$] of the conductive powder was measured under various pressures. The value of the volume resistivity of CNTs at a density of 1 g/cm$^3$ was evaluated.

<Cumulative particle size of CNT dispersion>

The CNT dispersion was left in a thermostatic chamber at 25°C for 1 hour or longer, the CNT dispersion was then sufficiently stirred and diluted, and the cumulative particle size D50 of the CNT dispersion was then measured using a particle size distribution meter (Nanotrac UPA, model UPA-EX, commercially available from MicrotracBel Corp.) using dynamic light scattering. The particle refractive index of the CNTs was 1.8, and the shape was non-spherical. The refractive index of the solvent was 1.333. Measurement was performed by diluting the concentration of the CNT dispersion so that the numerical value of the loading index was in a range of 0.8 to 1.2.

<Complex elastic modulus and phase angle of CNT dispersion>

The complex elastic modulus and phase angle of the CNT dispersion were evaluated by using a rheometer (RheoStress1 rotary rheometer, commercially available from Thermo Fisher Scientific) with a cone of a diameter 35 mm and 2°, and measuring the dynamic viscoelasticity at 25 °C, and a frequency of 1 Hz with a strain rate in the range of 0.01% to 5%.

<Viscosity of CNT dispersion >

The CNT dispersion was left in a thermostatic chamber at 25°C for 1 hour or longer, the CNT dispersion was then sufficiently stirred, and the viscosity was then immediately measured using a B type viscometer (VISCOMETER, MODEL: BL, commercially available from TOKI SANGYO) rotor at a rotation speed of 60 rpm. Regarding the type of the rotor used for the measurement, a No. 1 rotor was used when the viscosity value was less than 100 mPa·s, a No. 2 rotor was used when the viscosity value was 100 or more and less than 500 mPa·s, a No. 3 rotor was used when the viscosity value was 500 or more and less than 2,000 mPa·s, and a No. 4 rotor was used when the viscosity value was 2,000 or more and less than 10,000 mPa·s.

<Peeling strength of electrode film for negative electrode>

A negative electrode mixture slurry was applied onto a copper foil using an applicator so that the basis weight per unit of the electrode was 8 mg/cm$^2$ and the coating film was then dried in an electric oven at 120°C±5°C for 25 minutes. Then, the film was cut into two 90 mm×20 mm rectangles with the coating direction as the major axis. The peeling strength was measured using a desktop tensile tester (Strograph E3, commercially available from Toyo Seiki Co., Ltd.) and evaluated according to the 180 degree peeling test method. Specifically, a double-sided tape with a size of 100 mm×30 mm (No. 5,000NS, commercially available from Nitoms Inc.) was attached to a stainless steel plate, the produced battery electrode mixture layer was brought into close contact with the other surface of the double-sided tape, peeling off was performed while pulling from the bottom to the top at a certain speed (50 mm/min), and the average value of stress at this time was used as the peeling strength.

<Peeling strength of electrode film for positive electrode>

A positive electrode mixture slurry was applied onto an aluminum foil using an applicator so that the basis weight per unit of the electrode was 20 mg/cm$^2$ and the coating film was then dried in an electric oven at 120°C±5°C for 25 minutes. Then, the film was cut into two 90 mm×20 mm rectangles with the coating direction as the major axis. The peeling strength was measured using a desktop tensile tester (Strograph E3, commercially available from Toyo Seiki Co., Ltd.) and evaluated according to the 180 degree peeling test method. Specifically, a double-sided tape with a size of 100 mm×30 mm (No. 5,000NS, commercially available from Nitoms Inc.) was attached to a stainless steel plate, the produced battery electrode mixture layer was brought into close contact with the other surface of the double-sided tape, peeling off was performed while pulling from the bottom to the top at a certain speed (50 mm/min), and the average value of stress at this time was used as the peeling strength.

<Production of standard positive electrode>

First, 93 parts by mass of the positive electrode active material (HED (registered trademark) NCM-111 1100, commercially available from BASF TODA Battery Materials LLC), 4 parts by mass of acetylene black (Denka Black (registered trademark) HS100, commercially available from Denka Co., Ltd.), and 3 parts by mass of PVDF (Kureha KF polymer W#1300, commercially available from Kureha Battery Materials Japan Co., Ltd.) were put into a plastic container having a volume of 150 cm$^3$ and then mixed with a spatula until powder was uniform. Then, 20.5 parts by mass of NMP was added thereto, and the mixture was stirred at 2,000 rpm for 30 seconds using a rotation/revolution mixer (Thinky Mixer, ARE-310, commercially available from Thinky Corporation). Then, the mixture in the plastic container was mixed with a spatula until it was uniform, and stirred at 2,000 rpm for 30 seconds using the rotation/revolution mixer. In addition, 14.6 parts by mass of NMP was then added thereto, and the mixture was stirred at 2,000 rpm for 30 seconds using the rotation/revolution mixer. Finally, the sample was stirred at 3,000 rpm for 10 minutes using a high-speed stirrer to obtain a positive electrode mixture slurry. Then, the positive electrode mixture slurry was applied onto an aluminum foil having a thickness of 20 μm as a current collector using an applicator and then dried in an electric oven at 120°C±5°C for 25 minutes, and the basis weight per unit area of the electrode was adjusted to 20 mg/cm$^2$. In addition, the sample was rolled by a roll press (3t hydraulic roll press, commercially available from Thank-Metal Co., Ltd.) to produce a standard positive electrode having a mixture layer density of 3.1 g/cm$^3$.

<Production of standard negative electrode>

0.5 parts by mass of acetylene black (Denka Black (registered trademark) HS- 100, commercially available from Denka Co., Ltd.), 1 part by mass of MAC500LC (carboxymethyl cellulose sodium salt Sunrose special type MAC500L, commercially available from Nippon Paper Industries Co., Ltd., non-volatile content of 100%), and 98.4 parts by mass of water were put into a plastic container having a volume of 150 cm$^3$, and then stirred using a rotation/revolution mixer (Thinky Mixer, ARE-310, commercially available from Thinky Corporation) at 2,000 rpm for 30 seconds. In addition, 87 parts by mass of artificial graphite (CGB-20, commercially available from Nippon Graphite Industries, Co., Ltd.) as an active material and 10 parts by mass of silicon were added, and the mixture was stirred using a high-speed stirrer at 3,000 rpm for 10 minutes. Subsequently, 3.1 parts by mass of SBR (TRD2001, commercially available from JSR) was added thereto, and the mixture was stirred at 2,000 rpm for 30 seconds using the rotation/revolution mixer (Thinky Mixer, ARE-310, commercially available from Thinky Corporation) to obtain a negative electrode mixture slurry. Then, the negative electrode mixture slurry was applied onto a copper foil using an applicator so that the basis weight per unit of the electrode was 8 mg/cm$^2$ and the coating film was then dried in an electric oven at 120°C±5°C for 25 minutes. In addition, the sample was rolled by a roll press (3t hydraulic roll press, commercially available from Thank-Metal Co., Ltd.) to produce a standard negative electrode having a mixture layer density of 1.7 g/cm³.

<Synthesis of dispersing agent (A)>

100 parts of acetonitrile was put into a reaction container including a gas inlet pipe, a thermometer, a condenser, and a stirrer, and the inside was purged with nitrogen gas. The inside of the reaction container was heated to 70°C, and a mixture containing 85.0 parts of acrylonitrile, 15.0 parts of acrylic acid, and 5.0 parts of 2,2'-azobis(2,4-dimethylvaleronitrile) (V-65, commercially available from NOF Corporation) was added dropwise over 2 hours and a polymerization reaction was performed. After dropwise addition was completed, the reaction was additionally performed at 70°C for 1 hour, 0.5 parts of perbutyl O was then added, and the reaction was additionally continued at 70°C for 1 hour. Then, the non-volatile content was measured, and it was confirmed that the conversion ratio exceeded 98%, and the dispersion medium was completely removed by concentration under a reduced pressure to obtain a dispersing agent (A). The weight average molecular weight (Mw) of the dispersing agent (A) was 38.000.

(Method of measuring weight average molecular weight (Mw))

The weight average molecular weight (Mw) of the produced dispersing agent (A) was measured through gel permeation chromatography (GPC) with an RI detector under the following conditions. The molecular weight was a pullulan conversion value.

Measurement sample: 0.1 mass% aqueous solution
Device: HLC-8320GPC (commercially available from Tosoh Corporation)
Eluent: 0.1 M NaCl aqueous solution
Column: TSKgel Super Multipore PW-M (commercially available from Tosoh Corporation)
Flow rate: 1.0 mL/min
Temperature: 25°C
Injection volume: 100 μL

Table 1 shows CNTs used in examples, comparative examples and production examples, and their outer diameters, average outer diameters, specific surface areas, G/D ratios, and powder resistivities (volume resistivities).

[Table 1]

Table 1

| Classification of CNT | CNT | Type of CNT | Outer diameter (nm) | Average outer diameter (nm) | BET specific surface area (m²/g) | G/D ratio | Powder resistivity (Ω·cm) |
|---|---|---|---|---|---|---|---|
| First CNT | A | TNSR (Timesnano) | 1 to 2 | 1.6 | 610 | 27.8 | $1.9 \times 10^{-3}$ |
| | B | TNSAR (Timesnano) | 1 to 2 | 1.3 | 950 | 36.4 | $2.5 \times 10^{-3}$ |
| | C | TUBALL SWCNT 93% (OCSiA) | 1.2 to 2.0 | 1.5 | 980 | 41.7 | $3.0 \times 10^{-3}$ |
| | D | TUBALL SWCNT 80% (OCSiA) | 1.3 to 2.3 | 1.8 | 520 | 39.1 | $2.4 \times 10^{-3}$ |
| Second CNT | E | JEIOTUBE 6A (JEIO) | 6 to 9 | 6.9 | 730 | 0.8 | $1.4 \times 10^{-2}$ |
| | F | JEIOTUBE 10B (JEIO) | 10 to 20 | 8.8 | 240 | 0.8 | $1.5 \times 10^{-2}$ |

Table 2 shows the dispersing agents used in examples, comparative examples and production examples.

[Table 2]

Table 2

| Dispersing agent | Type of dispersing agent | Average molecular weight | Degree of etherification |
|---|---|---|---|
| A | copolymer of acrylonitrile and acrylic acid | 38,000 | |
| B | carboxymethyl cellulose sodium salt (Sunrose® F01MC, Nippon Paper Industries) | 55,600 | 0.65 to 0.75 |
| C | carboxymethyl cellulose sodium salt (Sunrose® APP-84, Nippon Paper Industries) | 17,600 | 0.65 to 0.75 |
| D | polyvinylpyrrolidone (K-30, Nippon Shokubai Co., Ltd.) | 40,000 | |
| E | H-NBR (hydrogenated acrylonitrile-butadiene rubber) (Zetpole® 3300, Zeon Corporation) | | |

(Production Example 1)

99 parts of deionized water was put into a stainless steel container, 0.6 parts of the dispersing agent (A) was added while stirring was performed with a disper, and the mixture was stirred with a disper until it was uniform. Then, 0.4 parts of the CNT(A) was weighed out and added while stirring was performed with a disper, a square hole high shear screen was installed in a high shear mixer (L5M-A, commercially available from SILVERSON), and batch type dispersion was performed at a rate of 8,600 rpm until the entire sample was made uniform. Subsequently, a liquid to be dispersed was supplied from the stainless steel container to a high pressure homogenizer (Star Burst Labo HJP-17007, commercially available from Sugino Machine Ltd.) through a pipe and a pass-type dispersion treatment was performed 10 times to obtain a CNT dispersion (WA1). The dispersion treatment was performed using a single nozzle chamber with a nozzle diameter of 0.25 mm and a pressure of 100 MPa.

(Production Examples 2 to 17)

CNT dispersions (WA2 to WA10, WB1, WC1. WD1, WE1, and WF1 to WF3) were obtained in the same method as in Production Example 1 except that the type of CNT. the amount of CNT added, the type of dispersing agent, the amount of dispersing agent added, the amount of deionized water added, and the number of passes were changed as listed in Table 3.

Table 3 shows the type of CNT, the amount of CNT added, the type of dispersing agent, the amount of dispersing agent added, the amount of deionized water added, the number of passes, and the dispersion pressure of production examples.

46

[Table 3]

Table 3

| | CNT dispersion | CNT | | Dispersing agent | | Deionized water | CNT concentration | Amount of dispersing agent (vs. CNT concentration) | Number of passes | Dispersion pressure (MPa) |
|---|---|---|---|---|---|---|---|---|---|---|
| | | Type | Amount of CNT added (parts) | Type | Amount added (parts) | Amount added (parts) | | | | |
| Production Example 1 | WA1 | CNT (A) | 0.4 | A | 0.6 | 99 | 0.4% | 150% | 10 | 100 |
| Production Example 2 | WA2 | CNT (A) | 0.4 | A | 0.6 | 99 | 0.4% | 150% | 5 | 100 |
| Production Example 3 | WA3 | CNT (A) | 0.4 | A | 0.6 | 99 | 0.4% | 150% | 15 | 100 |
| Production Example 4 | WA4 | CNT (A) | 0.4 | A | 0.3 | 99.3 | 0.4% | 75% | 10 | 100 |
| Production Example 5 | WA5 | CNT (A) | 0.4 | A | 0.9 | 98.7 | 0.4% | 225% | 10 | 100 |
| Production Example 6 | WA6 | CNT (A) | 1 | A | 1.5 | 97.5 | 1.0% | 150% | 10 | 100 |
| Production Example 7 | WA7 | CNT (A) | 0.4 | B | 0.6 | 99 | 0.4% | 150% | 10 | 100 |
| Production Example 8 | WA8 | CNT (A) | 0.4 | C | 0.6 | 99 | 0.4% | 150% | 10 | 100 |
| Production Example 9 | WA9 | CNT (A) | 0.4 | D | 0.6 | 99 | 0.4% | 150% | 10 | 100 |
| Production Example 10 | WA10 | CNT (A) | 0.4 | A | 0.6 | 99 | 0.4% | 150% | 30 | 100 |
| Production Example 11 | WB1 | CNT (B) | 0.4 | A | 0.6 | 99 | 0.4% | 150% | 10 | 100 |
| Production Example 12 | WC1 | CNT (C) | 0.4 | A | 0.6 | 99 | 0.4% | 150% | 10 | 100 |

| | CNT dispersion | CNT | | Dispersing agent | | Deionized water | CNT concentration | Amount of dispersing agent (vs. CNT concentration) | Number of passes | Dispersion pressure (MPa) |
|---|---|---|---|---|---|---|---|---|---|---|
| | | Type | Amount of CNT added (parts) | Type | Amount added (parts) | Amount added (parts) | | | | |
| Production Example 13 | WD1 | CNT (D) | 0.4 | A | 0.6 | 99 | 0.4% | 150% | 10 | 100 |
| Production Example 14 | WE1 | CNT (E) | 1.2 | A | 0.54 | 98.26 | 1.2% | 45% | 40 | 100 |
| Production Example 15 | WF1 | CNT (F) | 5.0 | A | 2.25 | 92.75 | 5.0% | 45% | 50 | 100 |
| Production Example 16 | WF2 | CNT (F) | 4.0 | A | 1.8 | 94.2 | 4.0% | 45% | 40 | 100 |
| Production Example 17 | WF3 | CNT (F) | 3.0 | A | 1.35 | 95.65 | 3.0% | 45% | 30 | 100 |

EP 4 246 616 A1

(Example 1)

The CNT dispersion (WA1) containing first CNTs and the CNT dispersion (WE1) containing second CNTs produced in Production Example 1 were weighed out in a stainless steel container so that the CNT mass ratio was 1:30. Then, the mixture was stirred with a disper until it was uniform to obtain a CNT dispersion containing first CNTs and second CNTs (WAE1).

(Examples 2 to 19)

CNT dispersions containing first CNTs and second CNTs (WAE2 to WAE13, WBE1, WCE1, WDE1, and WAF1 to WAF3) were obtained in the same method as in Example 1 except that the type of CNT dispersion and the CNT mass ratio were changed as listed in Table 4.

(Comparative Examples 1 to 3)

CNT dispersions containing first CNTs and second CNTs (WAE14, WBE2 to WBE3) were obtained in the same method as in Example 1 except that the CNT mass ratio was changed as listed in Table 4.

Table 4 shows the mass ratio of the CNT dispersions used in examples and comparative examples, the CNT mass ratio, the total BET specific surface area ($m^2/g$) of the CNTs in the dispersion, and respective aspect ratios of the first CNTs and the second CNTs in the dispersion.

[Table 4]

Table 4

| | CNT dispersion | First CNT dispersion | | Second CNT dispersion | | CNT mass ratio | | Total BET specific surface area of CNT (m²/g) | Aspect ratio of CNT | |
| --- | --- | --- | --- | --- | --- | --- | --- | --- | --- | --- |
| | | CNT dispersion | Mass proportion | CNT dispersion | Mass proportion | First CNT | Second CNT | | First CNT | Second CNT |
| Example 1 | WAE1 | WA1 | 1 | WE1 | 10 | 1 | 30 | 725 | 4100 | 110 |
| Example 2 | WAE2 | WA1 | 1 | WE1 | 20 | 1 | 60 | 730 | 4100 | 110 |
| Example 3 | WAE3 | WA1 | 1 | WE1 | 30 | 1 | 90 | 730 | 4100 | 110 |
| Example 4 | WAE4 | WA1 | 1 | WE1 | 5 | 1 | 15 | 720 | 4100 | 110 |
| Example 5 | WAE5 | WA2 | 1 | WE1 | 10 | 1 | 30 | 725 | 5000 | 110 |
| Example 6 | WAE6 | WA3 | 1 | WE1 | 10 | 1 | 30 | 725 | 3300 | 110 |
| Example 7 | WAE7 | WA4 | 1 | WE1 | 10 | 1 | 30 | 725 | 5200 | 110 |
| Example 8 | WAE8 | WA5 | 1 | WE1 | 10 | 1 | 30 | 725 | 2900 | 110 |
| Example 9 | WAE9 | WA6 | 1 | WE1 | 25 | 1 | 30 | 725 | 6100 | 110 |
| Example 10 | WAE10 | WA7 | 1 | WE1 | 10 | 1 | 30 | 725 | 3600 | 110 |
| Example 11 | WAE11 | WA8 | 1 | WE1 | 10 | 1 | 30 | 725 | 3400 | 110 |
| Example 12 | WAE12 | WA9 | 1 | WE1 | 10 | 1 | 30 | 725 | 3000 | 110 |
| Example 13 | WAE13 | WA10 | 1 | WE1 | 10 | 1 | 30 | 725 | 2100 | 110 |
| Example 14 | WBE1 | WB1 | 1 | WE1 | 10 | 1 | 30 | 740 | 4400 | 110 |
| Example 15 | WCE1 | WC1 | 1 | WE1 | 10 | 1 | 30 | 740 | 3500 | 110 |
| Example 16 | WDE1 | WD1 | 1 | WE1 | 10 | 1 | 30 | 725 | 3400 | 110 |
| Example 17 | WAF1 | WA1 | 1 | WF1 | 2.4 | 1 | 30 | 250 | 4100 | 50 |
| Example 18 | WAF2 | WA1 | 1 | WF2 | 3 | 1 | 30 | 250 | 4100 | 55 |
| Example 19 | WAF3 | WA1 | 1 | WF3 | 4 | 1 | 30 | 250 | 4100 | 60 |
| Comparative Example 1 | WAE14 | WA1 | 1 | WE1 | 40 | 1 | 120 | 730 | 4100 | 110 |
| Comparative Example 2 | WBE2 | WB1 | 1 | WE1 | 1 | 1 | 3 | 790 | 4400 | 110 |

(continued)

| | CNT dispersion | First CNT dispersion | | Second CNT dispersion | | CNT mass ratio | | Total BET specific surface area of CNT (m²/g) | Aspect ratio of CNT | |
| --- | --- | --- | --- | --- | --- | --- | --- | --- | --- | --- |
| | | CNT dispersion | Mass proportion | CNT dispersion | Mass proportion | First CNT | Second CNT | | First CNT | Second CNT |
| Comparative Example 3 | WBE3 | WB1 | 3 | WE1 | 1 | 1 | 1 | 840 | 4400 | 110 |

(Production Example 18)

99 parts of NMP was put into a stainless steel container, 0.6 parts of the dispersing agent (E) was added while stirring was performed with a disper, and the mixture was stirred with a disper until the dispersing agent (E) was dissolved. Then, 0.4 parts of the CNT(A) was weighed out and added while stirring was performed with a disper, a square hole high shear screen was installed in a high shear mixer (L5M-A, commercially available from SILVERSON), and batch type dispersion was performed at a rate of 8,600 rpm until the entire sample was made uniform. Subsequently, a liquid to be dispersed was supplied from the stainless steel container to a high pressure homogenizer (Star Burst Labo HJP-17007, commercially available from Sugino Machine Ltd.) through a pipe and a pass-type dispersion treatment was performed 10 times to obtain a CNT dispersion (A1 1). The dispersion treatment was performed using a single nozzle chamber with a nozzle diameter of 0.25 mm and a pressure of 100 MPa.

(Production Examples 19 and 20)

CNT dispersions (B2 and E2) were obtained in the same method as in Production Example 18 except that the type of CNT, the amount of CNT added, the type of dispersing agent, the amount of dispersing agent added, the amount of NMP added, and the number of passes were changed as listed in Table 5.

[Table 5]

Table 5

| | CNT dispersion | CNT | | Dispersing agent | | NMP | CNT concentration | Amount of dispersing agent (vs. CNT concentration) | Number of passes | Dispersion pressure (MPa) |
|---|---|---|---|---|---|---|---|---|---|---|
| | | Type | Amount of CNT added (parts) | Type | Amount added (parts) | Amount added (parts) | | | | |
| Production Example 18 | A11 | CNT (A) | 0.4 | E | 0.6 | 99 | 0.4% | 150% | 10 | 100 |
| Production Example 19 | B2 | CNT (B) | 0.4 | E | 0.6 | 99 | 0.4% | 150% | 10 | 100 |
| Production Example 20 | E2 | CNT (E) | 1.2 | E | 0.54 | 98.26 | 1.2% | 45% | 40 | 100 |

EP 4 246 616 A1

(Example 20)

The first CNT dispersion (A11) and the second CNT dispersion (E2) produced in Production Example 18 were weighed out in a stainless steel container so that the CNT mass ratio was 1:30. Then, the mixture was stirred with a disper until it was uniform to obtain a CNT dispersion in which two types of CNTs were mixed (AE15).

(Examples 21 and 22)

CNT dispersions in which two types of CNTs were mixed (AE16 to AE17) were obtained in the same method as in Example 20 except that the CNT mass ratio was changed as listed in Table 6.

(Comparative Examples 4 to 6)

CNT dispersion in which two types of CNTs were mixed (AE18, BE4 to BE5) were obtained in the same method as in Example 20 except that the CNT mass ratio was changed as listed in Table 6.

[Table 6]

Table 6

| | CNT dispersion | First CNT dispersion | | Second CNT dispersion | | CNT mass ratio | | Total BET specific surface area of CNT (m²/g) | Aspect ratio of CNT | |
|---|---|---|---|---|---|---|---|---|---|---|
| | | CNT dispersion | Mass proportion | CNT dispersion | Mass proportion | First CNT | Second CNT | | First CNT | Second CNT |
| Example 20 | AE15 | A11 | 1 | E2 | 10 | 1 | 30 | 725 | 3900 | 100 |
| Example 21 | AE16 | A11 | 1 | E2 | 30 | 1 | 90 | 730 | 3900 | 100 |
| Example 22 | AE17 | A11 | 1 | E2 | 5 | 1 | 15 | 720 | 3900 | 100 |
| Comparative Example 4 | AE18 | A11 | 1 | E2 | 40 | 1 | 120 | 730 | 3900 | 100 |
| Comparative Example 5 | BE4 | B2 | 1 | E2 | 1 | 1 | 3 | 790 | 4300 | 100 |
| Comparative Example 6 | BE5 | B2 | 3 | E2 | 1 | 1 | 1 | 840 | 4300 | 100 |

(Example 23)

8.9 parts of deionized water was put into a stainless steel container, 0.06 parts of the dispersing agent (A) was added while stirring was performed with a disper, and the mixture was stirred with a disper until it was uniform. Then, 0.04 parts of the CNT(A) was weighed out and added while stirring was performed with a disper, a square hole high shear screen was installed in a high shear mixer(L5M-A, commercially available from SILVERSON), and batch type dispersion was performed at a rate of 8,600 rpm until the entire sample was made uniform to obtain a premix liquid (A). Subsequently, 89.26 parts of deionized water was put into a stainless steel container, 0.54 parts of the dispersing agent (A) was added while stirring was performed with a disper, and the mixture was stirred with a disper until it was uniform. Then, 1.2 parts of the CNT(E) was weighed out and added while stirring was performed with a disper, a square hole high shear screen was installed in a high shear mixer, and batch type dispersion was performed at a rate of 8,600 rpm until the entire sample was made uniform to obtain a premix liquid (B). Then, the premix liquid (B) was supplied from the stainless steel container to a high pressure homogenizer (Star Burst Labo HJP-17007, commercially available from Sugino Machine Ltd.) through a pipe, a pass-type dispersion treatment was performed 30 times, the premix liquid (A) was then supplied to a high pressure homogenizer through a pipe, and a pass-type dispersion treatment was additionally performed 10 times to obtain a CNT dispersion (WAE19). The dispersion treatment was performed using a single nozzle chamber with a nozzle diameter of 0.25 mm and a pressure of 100 MPa.

Table 7 shows the amount of CNT added in the CNT dispersion produced in Example 23. the amount of dispersing agent added, the amount of deionized water added, the total number of passes, the dispersion pressure (MPa), the total specific surface area ($m^2$/g), and the aspect ratio.

[Table 7]

Table 7

| | CNT dispersion | First CNT | | Second CNT | | Dispersing agent | | Deionized water | Total number of passes | Dispersion pressure (Mpa) | CNT mass ratio | | Total BET specific surface area of CNT (m²/g) | Aspect ratio of CNT | |
|---|---|---|---|---|---|---|---|---|---|---|---|---|---|---|---|
| | | Type | Amount of CNT added (parts) | Type | Amount of CNT added (parts) | Type | Amount added (parts) | Amount added (parts) | | | First CNT | Second CNT | | First CNT | Second CNT |
| Example 23 | WAE19 | A | 0.04 | E | 1.2 | A | 0.6 | 98.16 | 40 | 100 | 1 | 30 | 725 | 4100 | 120 |

27

Table 8 shows the evaluation results of the CNT dispersions produced in Examples 1 to 23 and Comparative Examples 1 to 6. The phase angle of the CNT dispersion was evaluated as A (good) when it was 10 or more and less than 50, B (acceptable) when it was 5 or more and less than 10, and C (poor) when it was less than 5 or 50 or more. The complex elastic modulus of the CNT dispersion was evaluated as A (good) when it was 5 or more and less than 400, B (acceptable) when it was 400 or more and less than 650, and C (poor) when it was less than 5. The viscosity of the CNT dispersion was evaluated as AA (very good) when it was less than 500 mPa·s, A (good) when it was 500 or more and less than 2,000 mPa·s, B (acceptable) when it was 2,000 or more and less than 10,000 mPa·s, and C (poor) when it was 10,000 mPa·s or more or precipitation or separation occurred. The particle size of the CNT dispersion was evaluated as A (good) when the particle size distribution at the cumulative particle size D50 was 900 nm or more and less than 4,000 nm, B (acceptable) when it was 400 run or more and less than 900 nm, and C (poor) when it was less than 400 nm or 4,000 nm or more.

[Table 8]

Table 8

| | CNT dispersion | Evaluation of complex elastic modulus | Evaluation of phase angle | Evaluation of viscosity | Evaluation of particle size |
|---|---|---|---|---|---|
| Example 1 | WAE1 | A | B | AA | A |
| Example 2 | WAE2 | A | B | AA | A |
| Example 3 | WAE3 | B | B | AA | B |
| Example 4 | WAE4 | A | A | AA | A |
| Example 5 | WAE5 | A | B | A | A |
| Example 6 | WAE6 | A | A | AA | B |
| Example 7 | WAE7 | A | B | AA | B |
| Example 8 | WAE8 | A | A | AA | A |
| Example 9 | WAE9 | A | A | B | B |
| Example 10 | WAE10 | A | A | B | A |
| Example 11 | WAE11 | A | A | A | A |
| Example 12 | WAE12 | A | B | A | A |
| Example 13 | WAE13 | B | B | AA | B |
| Example 14 | WBE1 | A | A | AA | A |
| Example 15 | WCE1 | A | B | AA | A |
| Example 16 | WDE1 | A | B | AA | A |
| Example 17 | WAF1 | A | B | B | B |
| Example 18 | WAF2 | A | B | A | B |
| Example 19 | WAF3 | A | B | A | B |
| Comparative Example 1 | WAE14 | B | C | B | B |
| Comparative Example 2 | WBE2 | B | C | B | B |
| Comparative Example 3 | WBE3 | B | C | B | B |
| Example 20 | AE15 | A | B | AA | A |
| Example 21 | AE16 | A | B | AA | A |

(continued)

| | CNT dispersion | Evaluation of complex elastic modulus | Evaluation of phase angle | Evaluation of viscosity | Evaluation of particle size |
|---|---|---|---|---|---|
| Example 22 | AE17 | A | A | AA | A |
| Comparative Example 4 | AE18 | B | C | B | B |
| Comparative Example 5 | BE4 | B | C | B | B |
| Comparative Example 6 | BE5 | B | C | B | B |
| Example 23 | WAE19 | A | A | AA | A |

(Example 24)

6.9 parts by mass of the CNT dispersion (WAE1), 12.5 parts by mass of an aqueous solution in which 2 mass% of CMC (#1190, commercially available from Daicel FineChem Co., Ltd.) was dissolved, and 7.7 parts by mass of deionized water were weighed out in a plastic container having a volume of 150 cm$^3$. Then, the mixture was stirred at 2,000 rpm for 30 seconds using the rotation/revolution mixer (Thinky Mixer, ARE-310, commercially available from Thinky Corporation) to obtain a CNT resin composition (W AE 1). Then, 2.4 parts by mass of silicon monoxide (SILICON MONOOXIDE, SiO 1.3C 5 $\mu$m, commercially available from Osaka Titanium Technologies Co., Ltd.) was added thereto and the mixture was stirred at 2,000 rpm for 30 seconds using the rotation/revolution mixer. In addition, 21.9 parts by mass of artificial graphite (CGB-20, commercially available from Nippon Graphite Industries, Co., Ltd.) was added thereto and the mixture was stirred at 2,000 rpm for 30 seconds using the rotation/revolution mixer. In addition, 0.78 parts by mass of a styrene butadiene emulsion (TRD2001, commercially available from JSR Corporation) was then added thereto and the mixture was stirred at 2,000 rpm for 30 seconds using the rotation/revolution mixer to obtain a mixture slurry for a negative electrode (WAE1).

(Examples 25 to 44). (Comparative Examples 7 to 11)

CNT resin compositions (WAE2 to WAE3, WAE4-1 to WAE4-2, WAE5 to WAE14, WBE1 to WBE3, WCE1, WDE1, WAF1 to WAF3, WAE19, WA1, and WE1), mixture slurries for a negative electrode (WAE2 to WAE3, WAE4-1 to WAE4-2, WAE5 to WAE14, WBE1 to WBE3, WCE1, WDE1, WAF1 to WAF3, WAE19, WA1, and WE1) were obtained in the same method as in Example 24 except that the CNT dispersion was changed as listed in Table 9 and the amounts of the CNT dispersion and deionized water added were adjusted so that the amount of CNT added in 100 parts by mass of the mixture slurry was changed to a value listed in Table 9. The non-volatile content of the mixture slurry for a negative electrode was set as 48 mass%.

(Example 45)

7.0 parts by mass of NMP in which 8 mass% of PVDF (Solef#5130, commercially available from Solvay) was dissolved was weighed out in a plastic container having a volume of 150 cm$^3$. Then, 15.6 parts by mass of the CNT dispersion (AE15) was added thereto and the mixture was stirred at 2,000 rpm for 30 seconds using the rotation/revolution mixer (Thinky Mixer, ARE-310) to obtain a CNT resin composition (AE15). In addition, 36.9 parts of a positive electrode active material (HED (registered trademark) NCM-111 1100, commercially available from BASF TODA Battery Materials LLC) was then added thereto and the mixture was stirred at 2,000 rpm for 2.5 minutes using the rotation/revolution mixer to obtain a mixture slurry for a positive electrode (AE15).

(Examples 46 and 47), (Comparative Examples 12 to 14)

CNT resin compositions (AE16 to AE18, and BE4 to BE5) and mixture slurries for a positive electrode (AE16 to AE18, and BE4 to BE5) were obtained in the same method as in Example 45 except that the CNT dispersion was changed as listed in Table 9 and the amount of the CNT dispersion added was adjusted so that the amount of CNT added in 100 parts by mass of the mixture slurry was changed to a value listed in Table 9.

(Example 48)

0.6 parts by mass of the CNT dispersion (WA1), 12.5 parts by mass of an aqueous solution in which 2 mass% of CMC (#1190, commercially available from Daicel FineChem Co., Ltd.) was dissolved, and 7.7 parts by mass of deionized water were weighed out in a plastic container having a volume of 150 cm$^3$. Then, the mixture was stirred using a rotation/revolution mixer (Thinky Mixer, ARE-310, commercially available from Thinky Corporation) at 2,000 rpm for 30 seconds to obtain a CNT resin composition (WA1). Then, 2.4 parts by mass of silicon monoxide (SILICON MONOOXIDE. SiO 1.3C 5 μm, commercially available from Osaka Titanium Technologies Co., Ltd.) was added thereto and the mixture was stirred at 2,000 rpm for 30 seconds using the rotation/revolution mixer. In addition, 21.9 parts by mass of artificial graphite (CGB-20, commercially available from Nippon Graphite Industries, Co., Ltd.) was added thereto and the mixture was stirred at 2,000 rpm for 30 seconds using the rotation/revolution mixer. In addition, 0.63 parts by mass of the CNT dispersion (WE1) was added thereto and the mixture was stirred at 2,000 rpm for 30 seconds using the rotation/revolution mixer. In addition, 0.78 parts by mass of a styrene butadiene emulsion (TRD2001, commercially available from JSR Corporation) was then added thereto and the mixture was stirred at 2,000 rpm for 30 seconds using the rotation/revolution mixer to obtain a mixture slurry for a negative electrode (WAE20).

[Table 9]

Table 9

| | Mixture slurry for negative electrode | CNT resin composition | CNT dispersion | Amount of CNT added (parts) | |
|---|---|---|---|---|---|
| | | | | First CNT | Second CNT |
| Example 24 | WAE1 | WAE1 | WAE1 | 0.01 | 0.3 |
| Example 25 | WAE2 | WAE2 | WAE2 | 0.005 | 0.3 |
| Example 26 | WAE3 | WAE3 | WAE3 | 0.0033 | 0.3 |
| Example 27 | WAE4-1 | WAE4-1 | WAE4 | 0.02 | 0.3 |
| Example 28 | WAE4-2 | WAE4-2 | WAE4 | 0.01 | 0.15 |
| Example 29 | WAE5 | WAE5 | WAE5 | 0.01 | 0.3 |
| Example 30 | WAE6 | WAE6 | WAE6 | 0.01 | 0.3 |
| Example 31 | WAE7 | WAE7 | WAE7 | 0.01 | 0.3 |
| Example 32 | WAE8 | WAE8 | WAE8 | 0.01 | 0.3 |
| Example 33 | WAE9 | WAE9 | WAE9 | 0.01 | 0.3 |
| Example 34 | WAE10 | WAE10 | WAE10 | 0.01 | 0.3 |
| Example 35 | WAE11 | WAE11 | WAE11 | 0.01 | 0.3 |
| Example 36 | WAE12 | WAE12 | WAE12 | 0.01 | 0.3 |
| Example 37 | WAE13 | WAE13 | WAE13 | 0.01 | 0.3 |
| Example 38 | WBE1 | WBE1 | WBE1 | 0.01 | 0.3 |
| Example 39 | WCE1 | WCE1 | WCE1 | 0.01 | 0.3 |
| Example 40 | WDE1 | WDE1 | WDE1 | 0.01 | 0.3 |
| Example 41 | WAF1 | WAF1 | WAF1 | 0.01 | 0.3 |
| Example 42 | WAF2 | WAF2 | WAF2 | 0.01 | 0.3 |
| Example 43 | WAF3 | WAF3 | WAF3 | 0.01 | 0.3 |
| Example 44 | WAE19 | WAE19 | WAE19 | 0.01 | 0.3 |
| Example 48 | WAE20 | WA1 | WA1, WE1 | 0.01 | 0.3 |

(continued)

|  | Mixture slurry for negative electrode | CNT resin composition | CNT dispersion | Amount of CNT added (parts) | |
|---|---|---|---|---|---|
|  |  |  |  | First CNT | Second CNT |
| Comparative Example 7 | WAE14 | WAE14 | WAE14 | 0.0025 | 0.3 |
| Comparative Example 8 | WBE2 | WBE2 | WBE2 | 0.01 | 0.03 |
| Comparative Example 9 | WBE3 | WBE3 | WBE3 | 0.1 | 0.1 |
| Comparative Example 10 | WA1 | WA1 | WA1 | 0.01 | 0 |
| Comparative Example 11 | WE1 | WE1 | WE1 | 0 | 0.3 |

|  | Mixture slurry for positive electrode | CNT resin composition | CNT dispersion | Amount of CNT added (parts) | |
|---|---|---|---|---|---|
|  |  |  |  | First CNT | Second CNT |
| Example 45 | AE15 | AE15 | AE15 | 0.01 | 0.3 |
| Example 46 | AE16 | AE16 | AE16 | 0.0033 | 0.3 |
| Example 47 | AE17 | AE17 | AE17 | 0.02 | 0.3 |
| Comparative Example 12 | AE18 | AE18 | AE18 | 0.0025 | 0.3 |
| Comparative Example 13 | BE4 | BE4 | BE4 | 0.01 | 0.03 |
| Comparative Example 14 | BE5 | BE5 | BE5 | 0.1 | 0.1 |

(Example 49)

The mixture slurry for a negative electrode (WAE1) was applied onto a copper foil using an applicator so that the basis weight per unit of the electrode was 8 mg/cm$^2$ and the coating film was then dried in an electric oven at 120°C±5°C for 25 minutes to obtain an electrode film (WAE1).

(Examples 50 to 70), (Comparative Examples 15 to 19)

Electrode films (WAE2 to WAE3, WAE4-1 to WAE4-2, WAE5 to WAE14, WAE19 to WAE20, WBE1 to WBE3, WCE1. WDE1, WAF1 to WAF3, WA 1, and WE1) were obtained in the same method as in Example 49 except that the mixture slurry for a negative electrode was changed as listed in Table 10.

(Example 71)

The mixture slurry for a positive electrode (AE15) was applied onto a copper foil using an applicator so that the basis weight per unit of the electrode was 20 mg/cm$^2$, and the coating film was then dried in an electric oven at 120°C±5°C for 25 minutes to obtain an electrode film (AE15).

(Examples 72 and 73), (Comparative Examples 20 to 22)

Electrode films (AE16 to AE18, BE4, and BE5) were obtained in the same method as in Example 71 except that the mixture slurry for a positive electrode was changed as listed in Table 10.

Table 10 shows the evaluation results of the electrode films produced in Examples 49 to 73 and Comparative Examples 15 to 22. The adhesion was evaluated as AA (very good) when the peeling strength (N/cm) was 0.5 or more, A (good) when the peeling strength was 0.3 or more and less than 0.5, B (acceptable) when the peeling strength was 0.1 or more and less than 0.3, and C (poor) when the peeling strength was less than 0.1.

[Table 10]

Table 10

|  | Electrode film | Evaluation of adhesion |
|---|---|---|
| Example 49 | WAE1 | AA |
| Example 50 | WAE2 | AA |
| Example 51 | WAE3 | A |
| Example 52 | WAE4-1 | AA |
| Example 53 | WAE4-2 | B |
| Example 54 | WAE5 | AA |
| Example 55 | WAE6 | A |
| Example 56 | WAE7 | A |
| Example 57 | WAE8 | AA |
| Example 58 | WAE9 | A |
| Example 59 | WAE10 | A |
| Example 60 | WAE11 | AA |
| Example 61 | WAE12 | A |
| Example 62 | WAE13 | A |
| Example 63 | WBE1 | AA |
| Example 64 | WCE1 | AA |
| Example 65 | WDE1 | AA |
| Example 66 | WAF1 | AA |
| Example 67 | WAF2 | AA |
| Example 68 | WAF3 | AA |
| Example 69 | WAE19 | AA |
| Example 70 | WAE20 | AA |
| Comparative Example 15 | WAE14 | B |
| Comparative Example 16 | WBE2 | C |
| Comparative Example 17 | WBE3 | A |
| Comparative Example 18 | WA1 | A |
| Comparative Example 19 | WE1 | B |
| Example 71 | AE15 | AA |
| Example 72 | AE16 | A |

(continued)

| | Electrode film | Evaluation of adhesion |
|---|---|---|
| Example 73 | AE17 | AA |
| Comparative Example 20 | AE18 | B |
| Comparative Example 21 | BE4 | C |
| Comparative Example 22 | BE5 | A |

(Examples 74 to 95), (Comparative Examples 23 to 27)

Electrode films (WAE1 to WAE3, WAE4-1 to WAE4-2, WAE5 to WAE14, WAE19 to WAE20, WBE1 to WBE3, WCE1, WDE1, WAF1 to WAF3, WA1, and WE1) were rolled by a roll press (3t hydraulic roll press, commercially available from Thank-Metal Co., Ltd.) to produce negative electrodes having a mixture layer density of 1.7 g/cm$^3$.

(Example 96 to 98), (Comparative Examples 28 to 30)

Electrode films (AE15 to AE18, BE4. and BE5) were rolled by a roll press (3t hydraulic roll press, commercially available from Thank-Metal Co., Ltd.) to produce positive electrodes having a mixture layer density of 3.2 g/cm$^3$.
Table 11 shows the negative electrodes and the positive electrodes produced in Examples 74 to 98 and Comparative Examples 23 to 30.

[Table 11]

Table 11

| | Negative electrode | Negative electrode density (g/cc) |
|---|---|---|
| Example 74 | WAE1 | 1.7 |
| Example 75 | WAE2 | 1.7 |
| Example 76 | WAE3 | 1.7 |
| Example 77 | WAE4-1 | 1.7 |
| Example 78 | WAE4-2 | 1.7 |
| Example 79 | WAE5 | 1.7 |
| Example 80 | WAE6 | 1.7 |
| Example 81 | WAE7 | 1.7 |
| Example 82 | WAE8 | 1.7 |
| Example 83 | WAE9 | 1.7 |
| Example 84 | WAE10 | 1.7 |
| Example 85 | WAE11 | 1.7 |
| Example 86 | WAE12 | 1.7 |
| Example 87 | WAE13 | 1.7 |
| Example 88 | WBE1 | 1.7 |
| Example 89 | WCE1 | 1.7 |
| Example 90 | WDE1 | 1.7 |
| Example 91 | WAF1 | 1.7 |
| Example 92 | WAF2 | 1.7 |

(continued)

|  | Negative electrode | Negative electrode density (g/cc) |
|---|---|---|
| Example 93 | WAF3 | 1.7 |
| Example 94 | WAE19 | 1.7 |
| Example 95 | WAE20 | 1.7 |
| Comparative Example 23 | WAE14 | 1.7 |
| Comparative Example 24 | WBE2 | 1.7 |
| Comparative Example 25 | WBE3 | 1.7 |
| Comparative Example 26 | WA1 | 1.7 |
| Comparative Example 27 | WE1 | 1.7 |
|  |  |  |
|  | Positive electrode | Positive electrode density (g/cc) |
| Example 96 | AE15 | 3.2 |
| Example 97 | AE16 | 3. 2 |
| Example 98 | AE17 | 3.2 |
| Comparative Example 28 | AE18 | 3.2 |
| Comparative Example 29 | BE4 | 3. 2 |
| Comparative Example 30 | BE5 | 3.2 |

(Example 99)

The negative electrode (WAE1) and the standard positive electrode were punched out into 50 mm×45 mm and 45 mm×40 mm, respectively, and a separator (porous polypropylene film) inserted therebetween was inserted into an aluminum laminated bag and dried in an electric oven at 60°C for 1 hour. Then, 2 mL of an electrolytic solution (a nonaqueous electrolytic solution obtained by preparing a mixed solvent obtained by mixing ethylene carbonate, ethyl methyl carbonate and dimethyl carbonate at a ratio of 3:5:2 (volume ratio), additionally adding 1 part by mass of vinylene carbonate (VC) and fluoroethylene carbonate (FEC) as additives with respect to 100 parts by mass of the mixed solvent and then dissolving $LiPF_6$ at a concentration of 1 M) was injected into a glove box filled with argon gas, and the aluminum laminate was then sealed to produce a laminate type lithium ion secondary battery (WAE1).

(Examples 100 to 120), (Comparative Examples 31 to 35)

Laminate type lithium ion secondary batteries (WAE2 to WAE3, WAE4-1 to WAE4-2, WAE5 to WAE14, WAE19 to WAE20, WBE1 to WBE3, WCE1, WDE1, WAF1 to WAF 3, WA1, and WE1) were produced in the same method except that the negative electrode was changed as listed in Table 12.

(Example 121)

The standard negative electrode and the positive electrode (AE15) were punched out into 50 mm×45 mm and 45 mm×40 mm, respectively, and a separator (porous polypropylene film) inserted therebetween was inserted into an aluminum laminated bag and dried in an electric oven at 60°C for 1 hour. Then, 2 mL of an electrolytic solution (a nonaqueous electrolytic solution obtained by preparing a mixed solvent obtained by mixing ethylene carbonate, ethyl methyl carbonate and dimethyl carbonate at a ratio of 3:5:2 (volume ratio), additionally adding 1 part by mass of vinylene carbonate (VC) and fluoroethylene carbonate (FEC) as additives with respect to 100 parts by mass of the mixed solvent and then dissolving $LiPF_6$ at a concentration of 1 M) was injected into a glove box filled with argon gas, and the aluminum laminate was then sealed to produce a laminate type lithium ion secondary battery (AE15).

(Examples 122 and 123), (Comparative Examples 36 to 38)

Laminate type lithium ion secondary batteries (AE15 to AE18, BE4 to BE5) were produced in the same method except that the positive electrode was changed as listed in Table 12.

[Table 12]

Table 12

| | Laminate type lithium ion secondary battery | Negative electrode | Positive electrode |
|---|---|---|---|
| Example 99 | WAE1 | WAE1 | standard positive electrode |
| Example 100 | WAE2 | WAE2 | standard positive electrode |
| Example 101 | WAE3 | WAE3 | standard positive electrode |
| Example 102 | WAE4-1 | WAE4-1 | standard positive electrode |
| Example 103 | WAE4-2 | WAE4-2 | standard positive electrode |
| Example 104 | WAE5 | WAE5 | standard positive electrode |
| Example 105 | WAE6 | WAE6 | standard positive electrode |
| Example 106 | WAE7 | WAE7 | standard positive electrode |
| Example 107 | WAE8 | WAE8 | standard positive electrode |
| Example 108 | WAE9 | WAE9 | standard positive electrode |
| Example 109 | WAE10 | WAE10 | standard positive electrode |
| Example 110 | WAE11 | WAE11 | standard positive electrode |
| Example 111 | WAE12 | WAE12 | standard positive electrode |
| Example 112 | WAE13 | WAE13 | standard positive electrode |
| Example 113 | WBE1 | WBE1 | standard positive electrode |
| Example 114 | WCE1 | WCE1 | standard positive electrode |
| Example 115 | WDE1 | WDE1 | standard positive electrode |
| Example 116 | WAF1 | WAF1 | standard positive electrode |

(continued)

| | Laminate type lithium ion secondary battery | Negative electrode | Positive electrode |
|---|---|---|---|
| Example 117 | WAF2 | WAF2 | standard positive electrode |
| Example 118 | WAF3 | WAF3 | standard positive electrode |
| Example 119 | WAE19 | WAE19 | standard positive electrode |
| Example 120 | WAE20 | WAE20 | standard positive electrode |
| Comparative Example 31 | WAE14 | WAE14 | standard positive electrode |
| Comparative Example 32 | WBE2 | WBE2 | standard positive electrode |
| Comparative Example 33 | WBE3 | WBE3 | standard positive electrode |
| Comparative Example 34 | WA1 | WA1 | standard positive electrode |
| Comparative Example 35 | WE1 | WE1 | standard positive electrode |

| | Laminate type lithium ion secondary battery | Positive electrode | Negative electrode |
|---|---|---|---|
| Example 121 | AE15 | AE15 | standard negative electrode |
| Example 122 | AE16 | AE16 | standard negative electrode |
| Example 123 | AE17 | AE17 | standard negative electrode |
| Comparative Example 36 | AE18 | AE18 | standard negative electrode |
| Comparative Example 37 | BE4 | BE4 | standard negative electrode |
| Comparative Example 38 | BE5 | BE5 | standard negative electrode |

Table 13 shows the evaluation results of the laminate type lithium ion secondary batteries produced in Examples 124 to 148 and Comparative Examples 39 to 46. The rate property was evaluated as AA (very good) when the rate property was 80% or more, A (good) when the rate property was 70% or more and less than 80%, B (acceptable) when the rate property was 60% or more and less than 70%, and C (poor) when the rate property was less than 60%. The cycle property was evaluated as AA (very good) when the cycle property was 97% or more, A (good) when the cycle property was 93% or more and less than 97%, B (acceptable) when the cycle property was 90% or more and less than 93%, and C (poor) when the cycle property was less than 90%.

[Table 13]

Table 13

| | Laminate type lithium ion secondary battery | Rate property | Cycle property | Negative electrode | Positive electrode |
|---|---|---|---|---|---|
| Example 124 | WAE1 | AA | AA | WAE1 | standard positive electrode |
| Example 125 | WAE2 | AA | A | WAE2 | standard positive electrode |
| Example 126 | WAE3 | AA | A | WAE3 | standard positive electrode |
| Example 127 | WAE4-1 | AA | AA | WAE4-1 | standard positive electrode |
| Example 128 | WAE4-2 | B | A | WAE4-2 | standard positive electrode |
| Example 129 | WAE5 | AA | AA | WAE5 | standard positive electrode |
| Example 130 | WAE6 | AA | A | WAE6 | standard positive electrode |
| Example 131 | WAE7 | AA | B | WAE7 | standard positive electrode |
| Example 132 | WAE8 | A | AA | WAE8 | standard positive electrode |
| Example 133 | WAE9 | A | B | WAE9 | standard positive electrode |
| Example 134 | WAE10 | AA | B | WAE10 | standard positive electrode |
| Example 135 | WAE11 | AA | AA | WAE11 | standard positive electrode |
| Example 136 | WAE12 | A | A | WAE12 | standard positive electrode |
| Example 137 | WAE13 | A | AA | WAE13 | standard positive electrode |
| Example 13 8 | WBE1 | AA | AA | WBE1 | standard positive electrode |

(continued)

| | Laminate type lithium ion secondary battery | Rate property | Cycle property | Negative electrode | Positive electrode |
|---|---|---|---|---|---|
| Example 139 | WCE1 | AA | AA | WCE1 | standard positive electrode |
| Example 140 | WDE 1 | AA | A | WDE1 | standard positive electrode |
| Example 141 | WAF1 | A | A | WAF1 | standard positive electrode |
| Example 142 | WAF2 | AA | A | WAF2 | standard positive electrode |
| Example 143 | WAF3 | AA | A | WAF3 | standard positive electrode |
| Example 144 | WAE19 | AA | AA | WAE19 | standard positive electrode |
| Example 145 | WAE20 | AA | AA | WAE20 | standard positive electrode |
| Comparative Example 39 | WAE14 | A | C | WAE14 | standard positive electrode |
| Comparative Example 40 | WBE2 | C | C | WBE2 | standard positive electrode |
| Comparative Example 41 | WBE3 | C | AA | WBE3 | standard positive electrode |
| Comparative Example 42 | WA1 | C | B | WA1 | standard positive electrode |
| Comparative Example 43 | WE1 | A | C | WE1 | standard positive electrode |

| | Laminate type lithium ion secondary battery | Rate property | Cycle property | Positive electrode | Negative electrode |
|---|---|---|---|---|---|
| Example 146 | AE15 | AA | AA | AE15 | standard negative electrode |
| Example 147 | AE16 | AA | A | AE16 | standard negative electrode |

(continued)

|  | Laminate type lithium ion secondary battery | Rate property | Cycle property | Positive electrode | Negative electrode |
|---|---|---|---|---|---|
| Example 148 | AE17 | AA | AA | AE17 | standard negative electrode |
| Comparative Example 44 | AE18 | A | C | AE18 | standard negative electrode |
| Comparative Example 45 | BE4 | C | C | BE4 | standard negative electrode |
| Comparative Example 46 | BE5 | C | B | BE5 | standard negative electrode |

Among the above examples, in the examples using a carbon nanotube dispersion containing at least two or more types of different carbon nanotubes in which the first CNTs had an average outer diameter of 0.5 nm or more and less than 5 nm, the second CNTs had an average outer diameter of 5 nm or more and 20 nm or less, and the mass ratio between the first CNTs and the second CNTs was 1:10 to 1:100, compared to the comparative examples, a lithium ion secondary battery having an excellent rate property and cycle property was obtained. It was thought that, when the mass ratio exceeded 1:100, construction of the conductive network was insufficient and the cycle property deteriorated. It was thought that, when the mass ratio was less than 1:10, since the specific surface area of the carbon nanotubes in the system was too large, the proportion of an irreversible resistance component (SEI) formed on the surface of the carbon nanotubes increased, and the rate property deteriorated. Therefore, it can be clearly understood that, in the mass ratio range of 1:10 to 1:100, a lithium ion secondary battery that can exhibit advantages of respective carbon nanotubes while compensating for disadvantages, and having a high output and a long lifespan can be provided.

The present invention has been described above with reference to the embodiments, but the present invention is not limited thereto. Regarding configurations and details of the present invention, various modifications that can be understood by those skilled in the art can be made within the scope of the invention.

**Claims**

1. A carbon nanotube dispersion comprising carbon nanotubes, a dispersing agent, and a solvent,

   wherein the carbon nanotubes include first carbon nanotubes having an average outer diameter of 0.5 nm or more and less than 5 nm and second carbon nanotubes having an average outer diameter of 5 nm or more and 20 nm or less, and
   wherein a mass ratio between the first carbon nanotubes and the second carbon nanotubes is 1:10 to 1:100.

2. The carbon nanotube dispersion according to claim 1,
   wherein a total BET specific surface area of the first carbon nanotubes and the second carbon nanotubes is 240 $m^2$/g to 750 $m^2$/g.

3. The carbon nanotube dispersion according to claim 1 or 2,

   wherein an aspect ratio of the first carbon nanotubes is 2,000 to 10,000, and
   wherein an aspect ratio of the second carbon nanotubes is 50 to 200.

4. The carbon nanotube dispersion according to any one of claims 1 to 3,
   wherein, in a Raman spectrum of the first carbon nanotubes, when a maximum peak intensity in a range of 1,560 $cm^{-1}$ to 1,600 $cm^{-1}$ is G. and a maximum peak intensity in a range of 1,310 $cm^{-1}$ to 1,350 $cm^{-1}$ is D, the OID ratio is 10 to 100.

**5.** The carbon nanotube dispersion according to any one of claims 1 to 4,
wherein a BET specific surface area of the first carbon nanotubes is 600 m$^2$/g to 1,200 m$^2$/g.

**6.** The carbon nanotube dispersion according to any one of claims 1 to 5,
wherein a volume resistivity of the first carbon nanotubes is $1.0 \times 10^{-3}$ Ω·cm to $3.0 \times 10^{-2}$ Ω·cm.

**7.** The carbon nanotube dispersion according to any one of claims 1 to 6,
wherein a complex elastic modulus is 5 Pa or more and less than 650 Pa.

**8.** The carbon nanotube dispersion according to any one of claims 1 to 7,
wherein a phase angle is 5° or more and less than 50°.

**9.** The carbon nanotube dispersion according to any one of claims 1 to 8,
wherein a viscosity of a dispersion containing 0.3 parts by mass or more and 5.0 parts by mass or less of the carbon nanotubes in 100 parts by mass of the carbon nanotube dispersion measured at 25°C using a B type viscometer rotor at a rotation speed of 60 rpm is 10 mPa·s or more and less than 2,000 mPa s.

**10.** The carbon nanotube dispersion according to any one of claims 1 to 9,
wherein a cumulative particle size D50 measured by a dynamic light scattering method is 400 nm to 4,000 nm.

**11.** A carbon nanotube resin composition comprising the carbon nanotube dispersion according to any one of claims 1 to 10 and a binder.

**12.** A mixture slurry comprising the carbon nanotube resin composition according to claim 11 and an active material.

**13.** A method of producing the mixture slurry according to claim 12, comprising the following processes (1) and (2):

(1) a process of obtaining the carbon nanotube dispersion by dispersing a mixed solution containing the first carbon nanotubes, the second carbon nanotubes, the dispersing agent, and the solvent; and
(2) a process of mixing the carbon nanotube dispersion obtained in (1), a binder, and an active material.

**14.** A method of producing the mixture slurry according to claim 12, comprising the following processes (1) to (3):

(1) a process of obtaining a first carbon nanotube dispersion by dispersing a mixed solution containing the first carbon nanotubes, the dispersing agent, and the solvent;
(2) a process of obtaining a second carbon nanotube dispersion by dispersing a mixed solution containing the second carbon nanotubes, the dispersing agent, and the solvent; and
(3) a process of mixing the first carbon nanotube dispersion, the second carbon nanotube dispersion, a binder, and an active material.

**15.** An electrode film obtained by forming the mixture slurry according to claim 12 into a film.

**16.** A nonaqueous electrolyte secondary battery comprising a positive electrode, a negative electrode, and an electrolyte, wherein at least one of the positive electrode and the negative electrode includes the electrode film according to claim 15.

**INTERNATIONAL SEARCH REPORT**

| International application No. |
|---|
| **PCT/JP2021/041613** |

**A. CLASSIFICATION OF SUBJECT MATTER**

*H01M 4/139*(2010.01)i; *H01M 4/62*(2006.01)i; *C01B 32/159*(2017.01)i; *C01B 32/174*(2017.01)i
FI: C01B32/174; H01M4/139; H01M4/62 Z; C01B32/159

According to International Patent Classification (IPC) or to both national classification and IPC

**B. FIELDS SEARCHED**

Minimum documentation searched (classification system followed by classification symbols)

H01M4/139; H01M4/62; C01B32/159; C01B32/174

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2008-044820 A (FUJI XEROX CO., LTD.) 28 February 2008 (2008-02-28) claim 7, examples, paragraphs [0046], [0048], [0049], [0065], [0081] | 1-3, 5-10 |
| A | claim 7, examples, paragraphs [0046], [0048], [0049], [0065], [0081] | 4, 11-16 |
| A | WO 2020/004095 A1 (TOYO INK SC HOLDINGS CO., LTD.) 02 January 2020 (2020-01-02) claims, paragraphs [0020]-[0081] | 1-16 |
| A | JP 2016-025077 A (CNANO TECHNOLOGY LTD.) 08 February 2016 (2016-02-08) claims | 1-16 |
| A | JP 2018-095552 A (SEERSTONE LLC.) 21 June 2018 (2018-06-21) claims | 1-16 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**01 December 2021** | Date of mailing of the international search report<br><br>**14 December 2021** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br>Telephone No. |

Form PCT/ISA/210 (second sheet) (January 2015)

**INTERNATIONAL SEARCH REPORT**
Information on patent family members

International application No.

**PCT/JP2021/041613**

| Patent document cited in search report | | | Publication date (day/month/year) | Patent family member(s) | | | Publication date (day/month/year) |
|---|---|---|---|---|---|---|---|
| JP | 2008-044820 | A | 28 February 2008 | US 2008/0049380 A1 claim 9, examples, paragraphs [0041], [0043], [0044], [0063], [0086], [0087] | | | |
| WO | 2020/004095 | A1 | 02 January 2020 | EP 3816103 A1 claims, paragraphs [0020]-[0081] | | | |
| JP | 2016-025077 | A | 08 February 2016 | US 2011/0171364 A1 claims | | | |
| | | | | WO | 2013/066593 | A1 | |
| | | | | CN | 105280904 | A | |
| | | | | KR | 10-2016-0011558 | A | |
| JP | 2018-095552 | A | 21 June 2018 | US 2015/0064097 A1 claims | | | |
| | | | | WO | 2013/162650 | A1 | |
| | | | | CN | 104284862 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020105316 A
- JP 2011070908 A
- JP 2014019619 A
- JP 2012221672 A
- JP 2005162877 A
- WO 2018533175 A
- JP 2020190250 A
- JP 2021111681 A